# EUROPEAN PATENT APPLICATION

(11) **EP 4 390 753 A1**
(43) Date of publication of application: **26.06.2024**
(21) Application number: 22869111.9
(22) Date of filing: 08.09.2022
(51) Int. Cl.: G06F 40/30, G06F 40/284, G06N 3/04, G06N 3/08

(54) **TEXT DATA PROCESSING METHOD, NEURAL NETWORK TRAINING METHOD, AND RELATED DEVICES**

(30) Priority: 16.09.2021 CN 202111088859
(71) Applicant: Huawei Technologies Co., Ltd., Shenzhen, Guangdong 518129 (CN)
(72) Inventor: MENG, Xiaojun, Shenzhen, Guangdong 518129 (CN); WANG, Yasheng, Shenzhen, Guangdong 518129 (CN); JIANG, Xin, Shenzhen, Guangdong 518129 (CN); LIU, Qun, Shenzhen, Guangdong 518129 (CN)
(74) Representative: Pfenning, Meinig & Partner mbB
(86) International application number: PCT/CN2022/117797
(87) International publication number: WO 2023/040742

(57) **Abstract**

A text data processing method, a neural-network training method, and related devices are provided. The methods may be applied to the text data processing field in the artificial intelligence field. The method includes: obtaining a to-be-processed text, where the to-be-processed text includes a plurality of characters; and processing the to-be-processed text by using a target model to obtain a prediction result, where the prediction result indicates to split the to-be-processed text into a plurality of target character sets, the prediction result further includes a plurality of first labels, one first label indicates semantics of one target character set, and the plurality of first labels are used to determine an intention of the to-be-processed text. A reduplicated word or a modal auxiliary word can be split into another target character set, so that the intention of the to-be-processed text can still be understood even if the reduplicated word or the modal auxiliary word, or the like exists in the entire to-be-processed text. In this way, a natural language understanding method with a stronger generalization capability is provided.

## Description

This application claims priority to Chinese Patent Application 202111088859.9, filed with the China National Intellectual Property Administration on September 16, 2021 and entitled "TEXT DATA PROCESSING METHOD, NEURAL-NETWORK TRAINING METHOD, AND RELATED DEVICE", which is incorporated herein by reference in its entirety.

### TECHNICAL FIELD

This application relates to the artificial intelligence field, and in particular, to a text data processing method, a neural-network training method, and related devices.

### BACKGROUND

Artificial intelligence (artificial intelligence, AI) is a theory, a method, a technology, or an application system that simulates, extends, and expands human intelligence by using a digital computer or a machine controlled by a digital computer, to sense an environment, obtain knowledge, and obtain an optimal result based on the knowledge. In other words, artificial intelligence is a branch of computer science, and attempts to understand essence of intelligence and produce a new intelligent machine that can react in a similar manner to human intelligence. Artificial intelligence is to research design principles and implementation methods of various intelligent machines, so that the machines have perception, inference, and decision-making functions.

Performing natural language processing (natural language processing, NLP) by using a model is one of important means for implementing artificial intelligence. Currently, a natural language understanding method is based on template matching. Specifically, a plurality of template statements and an intention corresponding to each template statement may be configured on an execution device. After obtaining a to-be-processed text entered by a user, the execution device can match the to-be-processed text with the plurality of template statements. If a consistent statement can be matched, an intention of the to-be-processed text can be obtained. If no matching statement is found, matching fails.

However, the currently used template matching manner is rigid. If the to-be-processed text entered by the user is a statement approximate to the template statements, for example, if there is a reduplicated word or a modal auxiliary word in addition to the template statements, the matching fails, and the intention of the to-be-processed text cannot be obtained. Therefore, a natural language understanding method with a stronger generalization capability needs to be urgently launched.

### SUMMARY

Embodiments of this application provide a text data processing method, a neural-network training method, and related devices. A target character set may exclude a reduplicated word, a modal auxiliary word, or the like. In other words, a reduplicated word, a modal auxiliary word, or the like may be split into another target character set, so that an intention of a to-be-processed text can still be understood even if the reduplicated word, the modal auxiliary word, or the like exists in the entire to-be-processed text. In this way, a natural language understanding method with a stronger generalization capability is provided.

To resolve the foregoing technical problem, embodiments of this application provide the following technical solutions.

According to a first aspect, an embodiment of this application provides a text data processing method, which may be applied to the text data processing field in the artificial intelligence field. An execution device obtains a to-be-processed text, where the to-be-processed text includes one or more characters; and the execution device processes the to-be-processed text by using a target model to obtain a prediction result generated by the target model. The prediction result may be a result finally output by the target model, or may be an intermediate result generated by the target model in a processing process. The prediction result indicates to split the to-be-processed text into a plurality of target character sets, each target character set includes at least one character, the prediction result further includes one or more first labels, one first label in the at least one first label indicates semantics of one target character set, and all first labels in the prediction result are used together to determine an intention of the to-be-processed text.

In this implementation, semantic understanding is performed on the to-be-processed text by using the target model, to obtain the prediction result output by the target model. The prediction result indicates to split the to-be-processed text into the plurality of target character sets, and the prediction result further includes the first label that matches at least one target character set, so as to indicate the intention of the to-be-processed text by using all matched first labels. In this solution, the labels are used to match the characters in the to-be-processed text; and the target character set may exclude a reduplicated word, a modal auxiliary word, or the like, that is, a reduplicated word, a modal auxiliary word, or the like may be split into another target character set, so that the intention of the to-be-processed text can still be understood even if the reduplicated word, the modal auxiliary word, or the like exists in the entire to-be-processed text. In this way, a natural language understanding method with a stronger generalization capability is provided. In addition, the prediction result indicates how to split the entire to-be-processed text and further includes at least one label corresponding to the to-be-processed text, that is, the prediction result carries more abundant information, therefore helping improve accuracy of a process of understanding the intention of the to-be-processed text.

In a possible implementation of the first aspect, the plurality of first labels include at least two levels of labels, the at least two levels of labels include a parent label and a child label, and a belonging relationship exists between the parent label and the child label; and the prediction result further indicates the belonging relationship between the parent label and the child label, that is, the prediction result further indicates a quantity of levels corresponding to the at least two levels of labels included in the plurality of first labels, a level to which each first label belongs, and a correspondence between different labels.

In this implementation, the plurality of first labels include the at least two levels of labels, the at least two levels of labels include the parent label and the child label, and the belonging relationship exists between the parent label and the child label. In other words, the prediction result carries more abundant information, therefore helping improve accuracy of the process of understanding the intention of the to-be-processed text.

In a possible implementation of the first aspect, there are N splitting manners corresponding to the to-be-processed text, N is an integer greater than or equal to 1, the prediction result indicates a target splitting manner corresponding to the to-be-processed text, the target splitting manner belongs to the N splitting manners, and the prediction result is obtained based on degrees of matching between the plurality of target character sets and the plurality of first labels. Further, the prediction result is obtained based on a first score corresponding to each target character set, where the first score corresponding to the target character set indicates a degree of matching between the target character set and the first label. A value of a target total score corresponding to the target splitting manner is a sum of at least one first score corresponding to the target splitting manner, and the target splitting manner may be a splitting manner whose target total score is the highest in the N splitting manners; or the value of the target total score corresponding to the target splitting manner is greater than or equal to a first threshold.

In this implementation, the finally output prediction result indicates the target splitting manner corresponding to the to-be-processed text, and the prediction result is based on the degree of matching between each target character set and the first label. A higher degree of matching between the target character set and the first label indicates that the first label can more accurately indicate semantics of the target character set. According to this solution, at least one first label capable of more accurately indicating the intention of the to-be-processed text can be obtained.

In a possible implementation of the first aspect, that the execution device processes the to-be-processed text by using a target model to obtain a prediction result includes: The execution device matches each target character set with a plurality of character strings in a first data set, to determine a target character string that matches the target character set, and obtains, from the first data set, at least one second label corresponding to the target character string, where one character string includes at least one character; and the execution device matches, based on each target character set and the at least one second label by using a first model in the target model, each target character set with a plurality of labels in the first data set, to obtain the first label that matches each target character set. Further, a training device may generate, based on each target character set and the at least one second label by using the target model, a degree of matching between each target character set and each label in the first data set, to obtain a plurality of second scores corresponding to each target character set, where one second score in the plurality of second scores indicates a degree of matching between the target character set and one label in the first data set. The training device determines, based on the plurality of second scores by using the target model, the first label that matches each target character set.

In this embodiment of this application, in a process of generating the first label that matches the target character set, the target character set is matched with the plurality of character strings in the first data set, so as to determine at least one target character string that matches the target character set and obtain the at least one second label corresponding to the at least one target character string; and the target character set is matched with the plurality of labels in the first data set by using the target model, so as to obtain the first label that matches the target character set. In other words, when the character string that matches the second label and that is in a first database is updated, the target model does not need to be retrained, thereby avoiding a time cost arising from retraining of the target model. In addition, the character string in the first data set may be modified in time with reference to a change in an actual application scenario, thereby helping improve accuracy of understanding the intention of the to-be-processed text.

In a possible implementation of the first aspect, when the at least one second label includes at least two second labels, after the execution device obtains, from the first data set, the at least one second label corresponding to the target character string, the method further includes: The execution device generates, based on the to-be-processed text, the target character set, and the at least two second labels by using a second model in the target model, target indication information, where the target indication information indicates that each second label matches or does not match the target character set, the second model may be specifically represented as a binary model, and when the target indication information is specifically represented as a first value, it indicates that the second label matches the target character set, or when the target indication information is specifically represented as a second value, it indicates that the second label does not match the target character set; and the execution device screens the at least two second labels based on the target indication information, to obtain at least one screened label, where the at least one screened label may include at least one second label, or if the target indication information indicates that none of the second labels match the target character set, the at least one screened label may include a null label. That the execution device matches, based on the target character set and the second label by using the target model, the target character set with a plurality of labels in the first data set includes: The execution device matches, based on the target character set and the at least one screened label by using the target model, the target character set with the plurality of labels in the first data set.

In this implementation, after the at least one second label corresponding to the target character set is obtained, the at least one second label is further screened based on the entire to-be-processed text, so as to ensure that the at least one screened label can meet a context of the entire to-be-processed text, thereby reducing probability of matching an incorrect second label, and helping improve accuracy of understanding the intention of the to-be-processed text.

In a possible implementation of the first aspect, the target character set may be split into a first character and a second character. The execution device may respectively obtain a first label corresponding to the first character and a first label corresponding to the second character; and determine, based on the first label corresponding to the first character, the first label corresponding to the second character, the target character set, and the at least one second label that matches the target character set, the first label that matches the target character set.

In a possible implementation of the first aspect, after generating, based on the target character set and the at least one second label by using the target model, the plurality of second scores corresponding to the target character set, the execution device may obtain a sixth label corresponding to a second score that has a largest value in the plurality of second scores. The execution device determines, based on the first data set, whether the sixth label is a parent label of the first label corresponding to the first character; and/or determines, based on the first data set, whether the sixth label is a parent label of the first label corresponding to the second character. If a determining result is yes, the execution device determines a second score that has a largest value in the plurality of second scores as the first score, and determines the sixth label as the first label corresponding to the target character set. If a determining result is no, the execution device obtains a seventh label corresponding to a second score that has a second largest value in the plurality of second scores, and continues to perform the foregoing operation on the second score that has the second largest value in the plurality of second scores, until the first label corresponding to the target character set is obtained. The first label corresponding to the target character set is a parent label of the first label corresponding to the first character, and/or, the first label corresponding to the target character set is a parent label of the first label corresponding to the second character.

In a possible implementation of the first aspect, the execution device may input the first label corresponding to the first character, the first label corresponding to the second character, the target character set, and the at least one second label that matches the target character set into the first model in the target model, so as to generate, by using the first model in the target model, the degree of matching between the target character set and each label in the first data set, to obtain the plurality of second scores corresponding to the target character set. The execution device may determine a second score that has a largest value in the plurality of second scores as the first score, and determine a fifth label corresponding to the second score that has the largest value as the first label corresponding to the target character set.

According to a second aspect, an embodiment of this application provides a neural-network training method, which may be applied to the text data processing field in the artificial intelligence field. The method may include: A training device processes a to-be-processed text by using a target model to obtain a prediction result, where the to-be-processed text includes one or more characters, the prediction result indicates to split the to-be-processed text into a plurality of first character sets, each first character set includes at least one character, the prediction result further includes a plurality of first labels, one first label indicates semantics of one target character set, and the plurality of first labels are used to determine a predicted intention of the to-be-processed text; and the training device trains the target model according to a target loss function to obtain a trained target model. The target loss function indicates a similarity between the prediction result and an expected result corresponding to the to-be-processed text, the expected result corresponding to the to-be-processed text indicates to split the to-be-processed text into a plurality of second character sets, each second character set includes at least one character, the expected result corresponding to the to-be-processed text further includes a plurality of expected labels, one expected label indicates semantics of one second character set, and the plurality of expected labels are used to determine a correct intention of the to-be-processed text.

In a possible implementation of the second aspect, before the training device processes the to-be-processed text by using the target model, the method further includes: The training device obtains a target data subset, where the target data subset includes a first subset and a second subset, the first subset includes a first character string and a first expected label corresponding to the first character string, and the second subset includes a second character string and a second expected label corresponding to the second character string; and the training device determines, based on the target data subset, the to-be-processed text and the expected result corresponding to the to-be-processed text, where the to-be-processed text includes the first character string and the second character string, and the expected result includes the first expected label corresponding to the first character string and the second expected label corresponding to the second character string.

In this implementation, the to-be-processed text used for training and the expected result corresponding to the to-be-processed text are reversely generated based on the target data subset, so that separability of the to-be-processed text and accuracy of the expected result corresponding to the to-be-processed text are ensured. In other words, it is ensured that the to-be-processed text used for training meets processing logic of the target model. This helps improve adaptation between the to-be-processed text used for training and the target model, thereby helping improve accuracy of the trained target model.

In a possible implementation of the second aspect, a third score corresponding to the to-be-processed text meets a preset condition, and the third score indicates quality of the to-be-processed text. The preset condition may be that the third score is greater than or equal to a first preset threshold, or the preset condition may be that the third score is less than or equal to a second preset threshold. A specific representation form of the preset condition may be determined with reference to a specific manner of generating the third score. An indicator used to evaluate the quality of the to-be-processed text includes but is not limited to smoothness of a candidate training text, another type of evaluation indicator, or the like.

In this implementation, in an actual application process of the target model, texts entered by a user into the target model are all relatively smooth, and third scores corresponding to to-be-processed texts used for training meet the preset condition. Therefore, it is ensured that all the to-be-processed texts used for training are high-quality texts, that is, the to-be-processed texts used for training are relatively similar to an actual language habit of the user. This helps improve quality of training data, and also helps improve precision of the trained target model.

The training device provided in the second aspect of embodiments of this application may further perform steps performed by the execution device in the possible implementations of the first aspect. For meanings of nouns and specific implementation steps in the second aspect of embodiments of this application or the possible implementations of the second aspect, and beneficial effects brought by each possible implementation thereof, refer to descriptions in the possible implementations of the first aspect. Details are not described herein again.

According to a third aspect, an embodiment of this application provides a text data processing method, which may be applied to the text data processing field in the artificial intelligence field. An electronic device obtains a target data subset, where the target data subset includes a first subset and a second subset, the first subset includes a first character string and a first expected label corresponding to the first character string, and the second subset includes a second character string and a second expected label corresponding to the second character string; and the electronic device determines, based on the target data subset, a second data set corresponding to a target model, where the target model is used to perform semantic understanding on an input to-be-processed text, the second data set includes a plurality of target data subsets, and the second data set is used in a training phase of the target model and/or an inference phase of the target model. The target data subset indicates an expected result corresponding to the to-be-processed text, the expected result indicates to split the to-be-processed text into at least two groups of character strings, the at least two groups of character strings include the first character string and the second character string, and the correct result further includes the first expected label corresponding to the first character string and the second expected label corresponding to the second character string.

In a possible implementation of the third aspect, a plurality of first labels include at least two levels of labels, the at least two levels of labels include a parent label and a child label, and a belonging relationship exists between the parent label and the child label. The method may further include: The electronic device obtains, through a display interface, a first modification operation corresponding to the target data subset, where the first modification operation includes any one or more of the following operations: adding a parent label, adding a child label, deleting a parent label, deleting a child label, modifying label content, or another operation, or the like.

In a possible implementation of the third aspect, the method may further include: The electronic device obtains, through the display interface, a second modification operation corresponding to the target data subset, where the second modification operation includes any one or more of the following operations: deleting a character string in the target data subset, updating content of a character string in the target data subset, or adding a new character string to the target data subset.

In this implementation, it is convenient for a user to modify the character string in the target data subset in time through the display interface with reference to a change in an actual application scenario, thereby helping improve accuracy of understanding an intention of the to-be-processed text.

In a possible implementation of the third aspect, the method further includes: The electronic device obtains the to-be-processed text, where the to-be-processed text includes a plurality of characters; and processes the to-be-processed text by using the target model to obtain a prediction result, where the prediction result indicates to split the to-be-processed text into a plurality of target character sets, each target character set includes at least one character, the prediction result further includes a plurality of first labels, one first label indicates semantics of one target character set, and the plurality of first labels are used to determine the intention of the to-be-processed text.

The electronic device provided in the third aspect of embodiments of this application may further perform steps performed by the execution device in the possible implementations of the first aspect. For meanings of nouns and specific implementation steps in the third aspect of embodiments of this application or the possible implementations of the third aspect, and beneficial effects brought by each possible implementation thereof, refer to descriptions in the possible implementations of the first aspect. Details are not described herein again.

According to a fourth aspect, an embodiment of this application provides a text data processing apparatus, which may be used in the text data processing field in the artificial intelligence field. The text data processing apparatus may include: an obtaining module, configured to obtain a to-be-processed text, where the to-be-processed text includes a plurality of characters; and a processing module, configured to process the to-be-processed text by using a target model to obtain a prediction result, where the prediction result indicates to split the to-be-processed text into a plurality of target character sets, each target character set includes at least one character, the prediction result further includes a plurality of first labels, one first label indicates semantics of one target character set, and the plurality of first labels are used to determine an intention of the to-be-processed text.

The text data processing apparatus provided in the fourth aspect of embodiments of this application may further perform steps performed by the execution device in the possible implementations of the first aspect. For specific implementation steps in the fourth aspect of embodiments of this application or the possible implementations of the fourth aspect, and beneficial effects brought by each possible implementation thereof, refer to descriptions in the possible implementations of the first aspect. Details are not described herein again.

According to a fifth aspect, an embodiment of this application provides a neural-network training apparatus, which may be applied to the text data processing field in the artificial intelligence field. The neural-network training apparatus may include: a processing module, configured to process a to-be-processed text by using a target model to obtain a prediction result, where the to-be-processed text includes one or more characters, the prediction result indicates to split the to-be-processed text into a plurality of first character sets, each first character set includes at least one character, the prediction result further includes a plurality of first labels, one first label indicates semantics of one target character set, and the plurality of first labels are used to determine a predicted intention of the to-be-processed text; and a training module, configured to train the target model according to a target loss function to obtain a trained target model. The target loss function indicates a similarity between the prediction result and an expected result corresponding to the to-be-processed text, the expected result corresponding to the to-be-processed text indicates to split the to-be-processed text into a plurality of second character sets, each second character set includes at least one character, the expected result corresponding to the to-be-processed text further includes a plurality of expected labels, one expected label indicates semantics of one second character set, and the plurality of expected labels are used to determine a correct intention of the to-be-processed text.

The neural-network training apparatus provided in the fifth aspect of embodiments of this application may further perform steps performed by the training device in the possible implementations of the second aspect. For specific implementation steps in the fifth aspect of embodiments of this application and the possible implementations of the fifth aspect, and beneficial effects brought by each possible implementation, refer to descriptions in the possible implementations of the second aspect. Details are not described herein again.

According to a sixth aspect, an embodiment of this application provides a text data processing apparatus, which may be used in the text data processing field in the artificial intelligence field. The text data processing apparatus may include: an obtaining module, configured to obtain a target data subset, where the target data subset includes a first subset and a second subset, the first subset includes a first character string and a first expected label corresponding to the first character string, and the second subset includes a second character string and a second expected label corresponding to the second character string; and a processing module, configured to determine, based on the target data subset, a second data set corresponding to a target model, where the target model is used to perform semantic understanding on an input to-be-processed text, the second data set includes a plurality of target data subsets, and the second data set is used in a training phase of the target model and/or an inference phase of the target model. The target data subset indicates an expected result corresponding to the to-be-processed text, the expected result indicates to split the to-be-processed text into at least two groups of character strings, the at least two groups of character strings include the first character string and the second character string, and the correct result further includes the first expected label corresponding to the first character string and the second expected label corresponding to the second character string.

The text data processing apparatus provided in the sixth aspect of embodiments of this application may further perform steps performed by the execution device in the possible implementations of the third aspect. For specific implementation steps in the sixth aspect of embodiments of this application or the possible implementations of the sixth aspect, and beneficial effects brought by each possible implementation thereof, refer to descriptions in the possible implementations of the third aspect. Details are not described herein again.

According to a seventh aspect, an embodiment of this application provides a computer program product. When the computer program runs on a computer, the computer is enabled to perform the text data processing method according to the first aspect or the third aspect, or the computer is enabled to perform the neural-network training method according to the second aspect.

According to an eighth aspect, an embodiment of this application provides a computer-readable storage medium. The computer-readable storage medium stores a computer program. When the program runs on a computer, the computer is enabled to perform the text data processing method according to the first aspect or the third aspect, or the computer is enabled to perform the neural-network training method according to the second aspect.

According to a ninth aspect, an embodiment of this application provides an execution device, where the execution device may include a processor, the processor is coupled to a memory, the memory stores program instructions, and when the program instructions stored in the memory are executed by the processor, the text data processing method according to the first aspect is implemented.

According to a tenth aspect, an embodiment of this application provides an electronic device, where the electronic device may include a processor, the processor is coupled to a memory, the memory stores program instructions; and when the program instructions stored in the memory are executed by the processor, the neural-network training method according to the second aspect is implemented; or when the program instructions stored in the memory are executed by the processor, the text data processing method according to the third aspect is implemented.

According to an eleventh aspect, an embodiment of this application provides a circuit system, where the circuit system includes a processing circuit, and the processing circuit is configured to perform the text data processing method according to the first aspect or the third aspect, or the processing circuit is configured to perform the neural-network training method according to the second aspect.

According to a twelfth aspect, an embodiment of this application provides a chip system, where the chip system includes a processor, configured to implement functions in the foregoing aspects, for example, sending or processing of data and/or information in the foregoing methods. In a possible design, the chip system further includes a memory, where the memory is configured to store program instructions and data that are necessary for a server or a communication device. The chip system may include a chip, or may include a chip and another discrete component.

### BRIEF DESCRIPTION OF DRAWINGS

FIG. 1 is a schematic diagram of a structure of an artificial intelligence main framework according to an embodiment of this application;
FIG. 2 is an architectural diagram of a text data processing system according to an embodiment of this application;
FIG. 3 is a schematic flowchart of a neural-network training method according to an embodiment of this application;
FIG. 4 is a schematic diagram of an interface through which a target data subset is obtained in a neural-network training method according to an embodiment of this application;
FIG. 5 is a schematic diagram of an interface through which a first modification operation is obtained in a neural-network training method according to an embodiment of this application;
FIG. 6 is a schematic diagram of an interface through which a second modification operation is obtained in a neural-network training method according to an embodiment of this application;
FIG. 7 is a schematic diagram of a prediction result in a neural-network training method according to an embodiment of this application;
FIG. 8 is a schematic flowchart of generating a plurality of second scores corresponding to a first character set in a neural-network training method according to an embodiment of this application;
FIG. 9 is a schematic flowchart of a neural-network training method according to an embodiment of this application;
FIG. 10 is a schematic flowchart of a text data processing method according to an embodiment of this application;
FIG. 11 is a schematic flowchart of a text data processing method according to an embodiment of this application;
FIG. 12 is a schematic diagram of a structure of a text data processing apparatus according to an embodiment of this application;
FIG. 13 is another schematic diagram of a structure of a text data processing apparatus according to an embodiment of this application;
FIG. 14 is a schematic diagram of a structure of a neural-network training apparatus according to an embodiment of this application;
FIG. 15 is another schematic diagram of a structure of a neural-network training apparatus according to an embodiment of this application;
FIG. 16 is a schematic diagram of a structure of a text data processing apparatus according to an embodiment of this application;
FIG. 17 is a schematic diagram of a structure of an execution device according to an embodiment of this application;
FIG. 18 is a schematic diagram of a structure of an electronic device according to an embodiment of this application; and
FIG. 19 is a schematic diagram of a structure of a chip according to an embodiment of this application.

### DESCRIPTION OF EMBODIMENTS

In the specification, claims, and accompanying drawings of this application, the terms "first", "second", and the like are intended to distinguish between similar objects but do not necessarily indicate a specific order or sequence. It needs to be understood that, the terms used in such a way are interchangeable in proper circumstances, and this is merely a discrimination manner for describing objects having a same attribute in embodiments of this application. In addition, the terms "include", "contain" and any other variants mean to cover non-exclusive inclusion, so that a process, method, system, product, or device that includes a series of units is not necessarily limited to those units, but may include other units not expressly listed or other units inherent to such a process, method, system, product, or device.

The following describes embodiments of this application with reference to the accompanying drawings. A person of ordinary skill in the art may learn that, with development of technologies and emergence of new scenarios, technical solutions provided in embodiments of this application are also applicable to a similar technical problem.

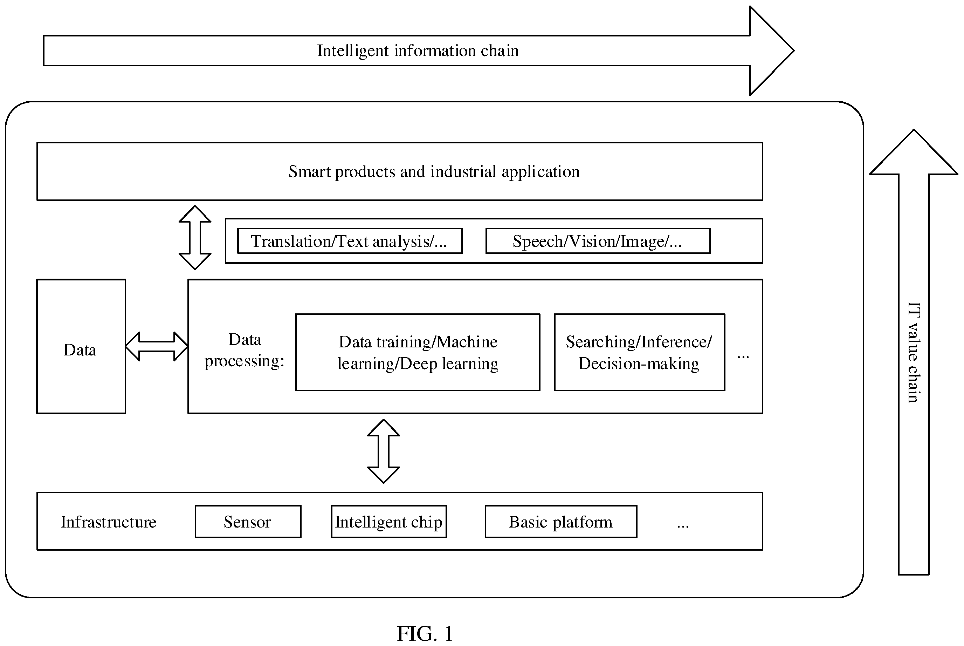

First, an overall working process of an artificial intelligence system is described herein. FIG. 1 is a schematic diagram of a structure of an artificial intelligence main framework. The artificial intelligence main framework is elaborated below in terms of two dimensions: an "intelligent information chain" (a horizontal axis) and an "IT value chain" (a vertical axis). The "intelligent information chain" indicates a series of processes from obtaining data to processing the data. For example, the processes may be general processes of intelligent information perception, intelligent information representation and formation, intelligent inference, intelligent decision-making, and intelligent execution and output. In this course, the data undergoes a refinement process of "data-information-knowledge-intelligence". The "IT value chain", in a course from an underlying artificial intelligence infrastructure and information (provision and processing of technical implementation) to industrial ecology of a system, indicates value that artificial intelligence contributes to the industry of information technologies.

### (1) Infrastructure

The infrastructure provides computing capability support for the artificial intelligence system, implements communication with an external world, and implements support by using a basic platform. The infrastructure communicates with the external world by using a sensor. A computing capability is provided by an intelligent chip. The intelligent chip includes but is not limited to a hardware acceleration chip, such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field-programmable gate array (field-programmable gate array, FPGA). The basic platform includes related platform assurance and support, such as a distributed computing framework and a network; and may include cloud storage and computing, an interconnection and interworking network, and the like. For example, the sensor communicates with the outside to obtain data; and the data is provided, for computing, to an intelligent chip in a distributed computing system that is provided by the basic platform.

### (2) Data

Data at an upper layer of the infrastructure indicates a data source in the artificial intelligence field. The data relates to a graph, an image, speech, and a text, and further relates to Internet of Things data of a conventional device; and includes service data of an existing system, and perception data such as force, displacement, a liquid level, a temperature, and humidity.

### (3) Data processing

Data processing usually includes manners such as data training, machine learning, deep learning, searching, inference, and decision-making.

Machine learning and deep learning may be used to perform symbolic and formalized intelligent information modeling, extraction, preprocessing, training, and the like on data.

Inference is a process in which a human intelligent inference manner is simulated in a computer or an intelligent system, and machine thinking and problem resolving are performed by using formalized information according to an inference control policy. A typical function is searching and matching.

Decision-making is a process in which a decision is made after inference with intelligent information, and usually provides functions such as classification, sequencing, and prediction.

### (4) General capabilities

After the foregoing data processing is performed on the data, some general capabilities may further be formed based on a data processing result, for example, an algorithm or a general system, such as translation, text analysis, computer vision processing, speech recognition, and image recognition.

### (5) Smart products and industrial application

Smart products and industrial application refer to products and application of the artificial intelligence system in various fields, and are encapsulation of an overall artificial intelligence solution, to incorporate intelligent information decision-making into the products and implement specific application. The application fields mainly include: a smart terminal, intelligent manufacturing, intelligent transportation, smart home, smart healthcare, intelligent security protection, self-driving, a smart city, and the like.

Embodiments of this application may be applied to natural language processing (natural language processing, NLP) in the artificial intelligence field, and specifically, may be applied to various application scenarios in which natural language understanding (natural language understanding, NLU) needs to be performed. For example, in the field of smart terminals, a user may enter "Book a movie ticket for this afternoon" on a mobile phone, and then the mobile phone needs to perform semantic understanding on the to-be-processed text "Book a movie ticket for this afternoon". In another example, in the smart home field, a user may enter "Is there a recommended dinner recipe" on a smart refrigerator, and the smart refrigerator needs to perform semantic understanding on the to-be-processed text "Is there a recommended dinner recipe".

In another example, in the self-driving field, a user may enter "Query the home location of the phone number of Xiao Ming" to a self-driving vehicle, and the self-driving vehicle needs to perform semantic understanding on the to-be-processed text "Query the home location of the phone number of Xiao Ming". Application scenarios in embodiments of this application are not further enumerated herein. In the foregoing application fields, an artificial intelligence technology needs to be used to perform natural language understanding, that is, in the foregoing application fields, a natural language understanding method with a stronger generalization capability is urgently in need.

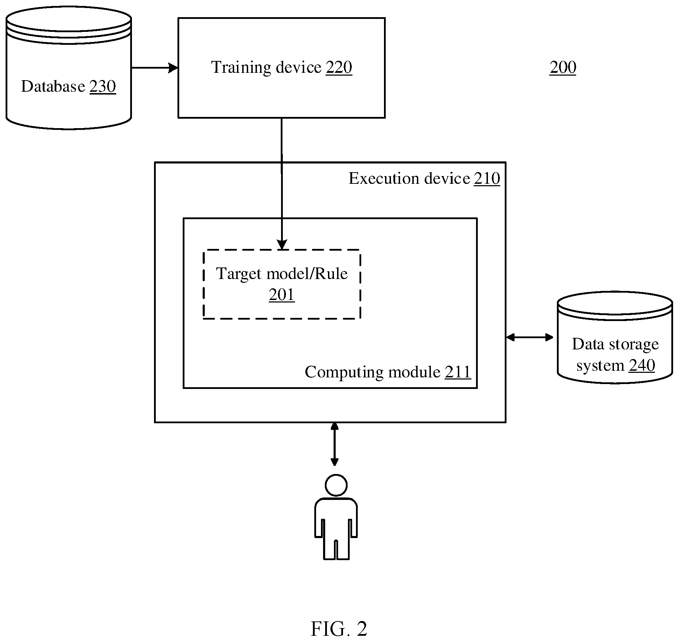

Before a text data processing method provided in an embodiment of this application is described in detail, a text data processing system provided in an embodiment of this application is first described with reference to FIG. 2. Refer to FIG. 2 first. FIG. 2 is an architectural diagram of a text data processing system according to an embodiment of this application. In FIG. 2, the text data processing system 200 includes an execution device 210, a training device 220, a database 230, and a data storage system 240, where the execution device 210 is provided with a computing module 211.

The database 230 stores a training data set. The training data set includes a plurality of to-be-processed texts and an expected result corresponding to each to-be-processed text, where the expected result indicates to split the to-be-processed text into at least one second character set, each second character set includes at least one character, the expected result further includes at least one expected label corresponding to the at least one second character set, and the at least one expected label indicates a correct intention of the to-be-processed text.

The training device 220 generates a target model/rule 201, and performs iterative training on the target model/rule 201 by using the training data set in the database 230, to obtain a trained target model/rule 201. The trained target model/rule 201 may also be referred to as a mature target model/rule 201. Further, the target model/rule 201 may be specifically implemented by using a neural network model or a model of a non-neural network type. This is not limited in this embodiment of this application.

The trained target model/rule 201 obtained by the training device 220 may be applied to different systems or devices, for example, a mobile phone, a tablet computer, a notebook computer, a virtual reality (virtual reality, VR) device, an intelligent robot, a self-driving vehicle, or another type of device. The execution device 210 may invoke data, code, and the like in the data storage system 240; or may store data, instructions, and the like into the data storage system 240. The data storage system 240 may be disposed in the execution device 210, or the data storage system 240 may be an external memory relative to the execution device 210.

The computing module 211 may perform semantic understanding on an input to-be-processed text by using the target model/rule 201, to obtain a prediction result output by the target model/rule 201, where the prediction result indicates to split the to-be-processed text into at least one target character set, each target character set includes at least one character, the prediction result further includes at least one first label corresponding to the at least one target character set, and the at least one first label indicates an intention of the to-be-processed text.

In this embodiment of this application, because the labels are used to match the characters in the to-be-processed text, the target character set may exclude a reduplicated word, a modal auxiliary word, or the like, that is, a reduplicated word, a modal auxiliary word, or the like may be split into another target character set, so that the intention of the to-be-processed text can still be understood even if the reduplicated word, the modal auxiliary word, or the like exists in the entire to-be-processed text, and a natural language understanding method with a stronger generalization capability is provided. In addition, the prediction result indicates how to split the entire to-be-processed text, and further includes at least one label corresponding to the to-be-processed text, that is, the prediction result carries more abundant information, therefore helping improve accuracy of a process of understanding the intention of the to-be-processed text.

In some embodiments of this application, with reference to FIG. 2, a "user" may directly interact with the execution device 210, that is, the execution device 210 may directly present, to the "user", a prediction result output by the target model/rule 201. It needs to be noted that FIG. 2 is merely a schematic architectural diagram of a text data processing system according to an embodiment of the present invention. Location relationships between devices, components, modules, and the like shown in the figure do not constitute any limitation. For example, in some other embodiments of this application, the execution device 210 and a client device may alternatively be separate devices, where the execution device 210 is provided with an input/output (in/out, I/O) interface, and the execution device 210 exchanges data with the client device through the I/O interface.

The following describes, with reference to the foregoing description, specific implementation processes of a training phase and an inference phase of a text data processing method provided in an embodiment of this application.

### 1. Training phase

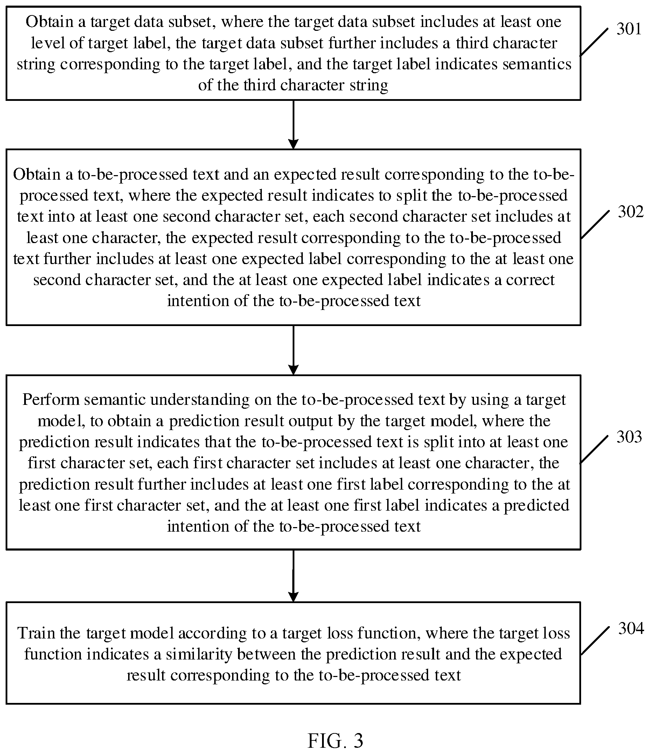

In this embodiment of this application, the training phase describes a process about how the training device 220 generates a mature neural network by using the image data set in the database 230. Specifically, refer to FIG. 3. FIG. 3 is a schematic flowchart of a neural-network training method according to an embodiment of this application. The neural-network training method provided in this embodiment of this application may include the following steps.

301: A training device obtains a target data subset, where the target data subset includes at least one level of target label, the target data subset further includes a third character string corresponding to the target label, and the target label indicates semantics of the third character string.

In some embodiments of this application, before training a target model, the training device may obtain a plurality of target data subsets. Each target data subset includes at least one level of target label, where the target data subset further includes a third character string corresponding to the target label, and the target label indicates semantics of the third character string.

The target model is used to perform semantic understanding on an input to-be-processed text, and the plurality of obtained target data subsets may be used in a training phase of the target model and/or an inference phase of the target model. Further, the plurality of target data subsets may be understood as that "the plurality of obtained target data subsets may be used to generate training data of the target model".

One third character string includes at least one character. The third character string may be specifically represented as a slot word, a conjunction, a tone word, another type of word, or the like. The third character string may be Chinese, English, Russian, another language, or the like. This needs to be specifically determined flexibly with reference to an actual application scenario, and is not limited herein. For example, the third character string may be "Make a query", "Make a search", "Have a check", or the like. In another example, the third character string may be "of", "with", or "and". In still another example, the third character string may be "ah", "bar", or "la". In yet another example, the third character string may be "party", "books", or the like. This is not further enumerated herein.

Further, in some cases, at least one target label included in a target data subset is at a same level, and the target data subset further includes a third character string corresponding to each target label. In an example, a target data subset includes only one target label f Query time}, and a third character string corresponding to the target label {Query time} may be "What time is it now?". It needs to be understood that the example herein is merely for ease of understanding which data may be included in a target data subset, and is not intended to limit this solution.

In some other cases, if one target data subset includes at least two levels of labels, the target data subset further needs to indicate a belonging relationship between the labels at different levels. The at least two levels of target labels include a third label and a fourth label, the target data subset further includes a third character string corresponding to the third label, the third label indicates an intention of the third character string, and the fourth label is a parent label of the third label, that is, the third label is a child label of the fourth label.

For example, a target data subset may be specifically represented as the following content:

```
          IN_#{Home location query} -> # f Query number}#{Home location}
          #{Query number} -> #{Query }# { Phone number}
          #{Query} -> Make a querylmake a search|Ask|Have a checkl...
          #{Phone number} -> Phone number|Mobile phone number|Mobile numberINumberl...
          #{Home location} -> Which place|From where|Where|Where is itl...
```

In the foregoing content, "->" indicates a belonging relationship between labels at different levels, and "#{}" indicates a label name. In the foregoing example, a target data subset including three levels of labels is used as an example. The label "Home location query" is a parent label of the labels "Query number" and "Home location", and the label "Query number" is a parent label of the labels "Query" and "Phone number". A third label is a label at a lowest level. Slot words such as "Make a query", "Make a search", ..., "Phone number", "Mobile phone number", ..., "Where", and "Where is it" shown in the foregoing example are examples of a plurality of third character strings included in a target data subset. A third label indicates an intention of a third character string, for example, intentions of the four third character strings "Make a query", "Make a search", "Ask", and "Have a check" are all "Query". In other words, the target data subset further indicates a belonging relationship between the labels at different levels. It needs to be understood that the examples herein are merely used to facilitate an understanding of data that may be included in a target data subset, and is not intended to limit this solution.

Optionally, if the target model is dedicated to processing text data in a target data domain, each target data subset may include data in the target data domain. For example, if the target model is configured in a home teaching robot, that is, the target model is used to perform semantic understanding on texts of the education field, the target data domain is data of the education field. It needs to be understood that the example herein is merely used to facilitate an understanding of a concept of the target data domain, and is not intended to limit this solution.

The training device may further obtain a plurality of first data subsets, where a concept of the first data subset is similar to that of the target data domain, and a difference lies in that, the plurality of third character strings included in the target data subset all belong to the target data domain, but none of a plurality of third character strings included in a first data subset are data in the target data domain. In a first data subset, a third label corresponding to a third character string may be a type of the third character string, a type of a data domain in which the third character string is located, a label of another type, or the like. For example, a third label in a first data subset may be a "noun", a "verb", or another label, and is not further enumerated herein.

For a manner of obtaining the "target data subset", in an implementation, the training device may receive a plurality of target data subsets sent by another communication device, and locally store the plurality of received target data subsets.

In another implementation, the training device may be configured with a display interface, and receive, through the display interface, at least one target data subset entered by a user. In other words, the user may set, through the display interface, a quantity of levels of labels to be included in one target data subset and a belonging relationship between the labels at different levels, and may further enter content of each label and content of a plurality of third character strings through the display interface.

In another implementation, the training device may receive a plurality of target data subsets sent by another communication device, and receive, through the display interface, at least one target data subset entered by the user.

Optionally, the training device may further receive, through the display interface, a setting operation performed by the user on a label category, where the label category indicates whether a label is mandatory or optional.

Optionally, the training device may further receive, through the display interface, a target modification operation performed by the user on a target data subset. The target modification operation may include a first modification operation on the target data subset and/or a second modification operation on a third character string. The first modification operation includes but is not limited to: adding a parent label, adding a child label, deleting a parent label, deleting a child label, modifying label content, or another operations or the like. The second modification operation includes but is not limited to: adding, deleting, or modifying content of a third character string, or another operation or the like. This may be specifically set flexibly with reference to an actual product form.

In this implementation, it is convenient for the user to modify the character string in the target data subset in time through the display interface with reference to a change in an actual application scenario, thereby helping improve accuracy of understanding an intention of a to-be-processed text.

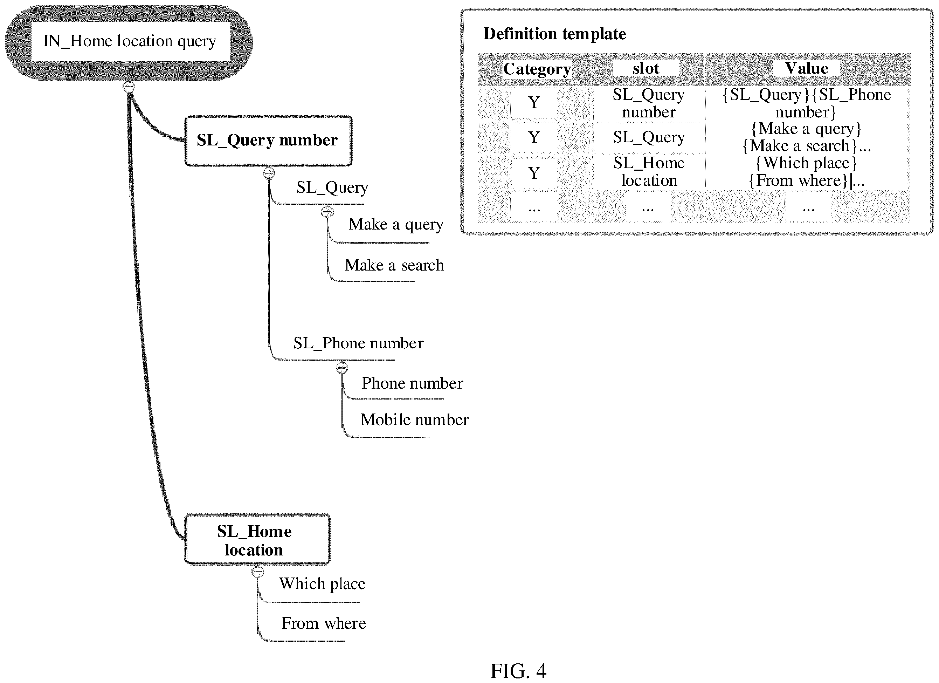

To understand this solution more intuitively, refer to FIG. 4 to FIG. 6. FIG. 4 is a schematic diagram of an interface through which a target data subset is obtained in a neural-network training method according to an embodiment of this application. First, refer to FIG. 4. FIG. 4 shows information that is displayed on a display interface and that is of a target data subset entered by a user. As shown in FIG. 4, the target data subset includes three levels of labels, where a first-level label is "Home location query"; second-level labels are "Query number" and "Home location"; "Home location query" is a parent label of "Query number" and "Home location"; third-level labels are "Query" and "Phone number"; and "Query number" is a parent label of "Query" and "Phone number".

FIG. 4 further shows that categories of the three labels "Query number", "Query", "Phone number", and "Home location" (that is, "Y" in FIG. 4) are mandatory. It needs to be noted that the user may modify a category of a label by modifying content of a table in FIG. 4. In addition, it needs to be understood that an example in FIG. 4 is merely used for ease of understanding this solution, and is not intended to limit this solution.

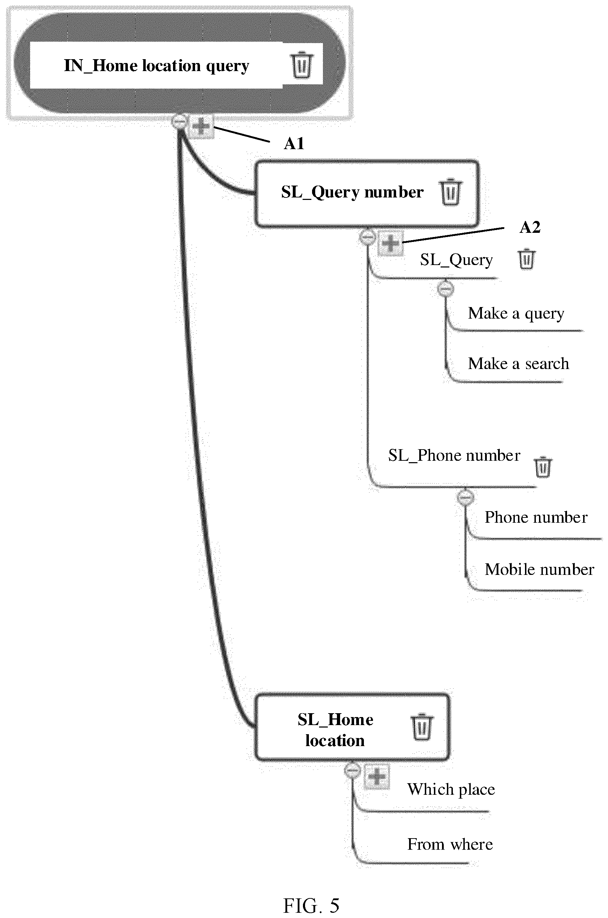

Refer to FIG. 5 again. FIG. 5 is a schematic diagram of an interface through which a first modification operation is obtained in a neural-network training method according to an embodiment of this application. To understand FIG. 5, refer to FIG. 4 and FIG. 5 together. The user may input a deletion operation on each label by using a deletion icon (that is, a trash bin icon in FIG. 5) beside the label, and the user may input an addition operation on a second-level label by tapping A1, or may input an addition operation on a third-level label by tapping A2. The user may directly tap a text of a label, to trigger a modification operation on content of the label. It needs to be understood that the example in FIG. 5 is merely for ease of understanding this solution, and is not intended to limit this solution.

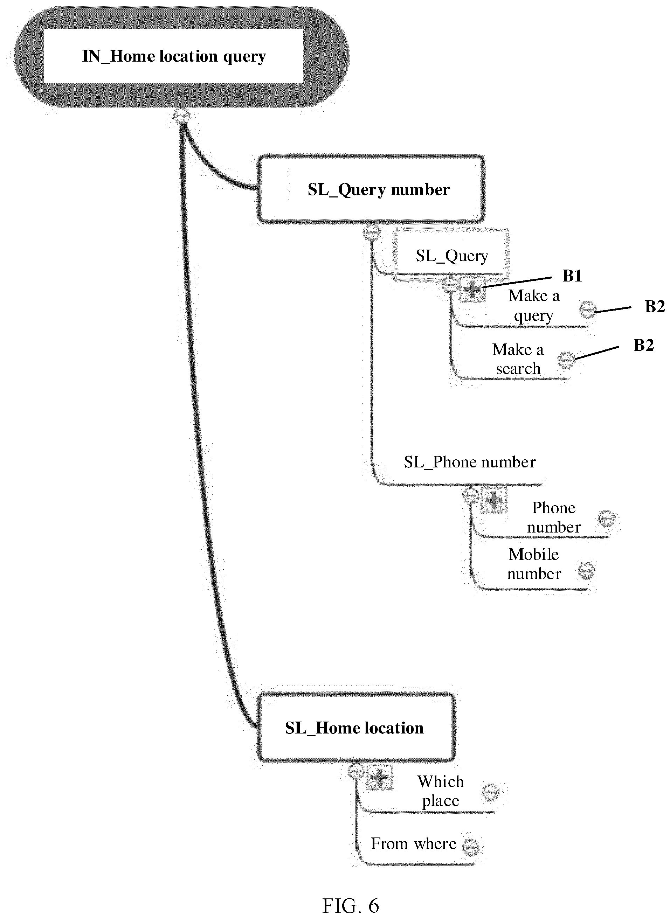

Next, refer to FIG. 6. FIG. 6 is a schematic diagram of an interface through which a second modification operation is obtained in a neural-network training method according to an embodiment of this application. To understand FIG. 6, refer to FIG. 4, FIG. 5, and FIG. 6 together. The user may input an addition operation on a third character string by tapping B1; or may input a deletion operation on a third character string by tapping B2; or the user may directly tap a text of a third character string, to trigger a modification operation on content of the third character string. It needs to be understood that the example in FIG. 6 is merely for ease of understanding this solution, and is not intended to limit this solution.

302: The training device obtains a to-be-processed text and an expected result corresponding to the to-be-processed text, where the expected result indicates to split the to-be-processed text into at least one second character set, each second character set includes at least one character, the expected result corresponding to the to-be-processed text further includes at least one expected label corresponding to the at least one second character set, and the at least one expected label indicates a correct intention of the to-be-processed text.

In this embodiment of this application, before training the target model, the training device needs to first obtain the to-be-processed text and the expected result corresponding to the to-be-processed text (that is, to obtain training data).

Specifically, the step 301 is optional. In an implementation, if the step 301 is performed, and a plurality of target data subsets obtained in the step 301 are used to generate training data of the target model, the training device may generate, based on any target data subset in the plurality of target data subsets, at least one to-be-processed text and an expected result corresponding to each to-be-processed text.

More specifically, in an implementation, a third score corresponding to the to-be-processed text used for training the target model meets a preset condition, where the third score indicates quality of the to-be-processed text.

The preset condition may be that the third score is greater than or equal to a first preset threshold, or the preset condition may be that the third score is less than or equal to a second preset threshold. A specific representation form of the preset condition may be determined with reference to a specific manner of generating the third score. An indicator used to evaluate the quality of the to-be-processed text includes but is not limited to smoothness of a candidate training text, another type of evaluation indicator, or the like.

In other words, after generating a candidate training text based on a target data subset, the training device may further generate a third score corresponding to the candidate training text, where the third score indicates quality of the candidate training text. The training device determines whether the third score corresponding to the candidate training text meets a preset condition. If a determining result is yes, the training device determines that the candidate training text is a to-be-processed text used for training the target model; and obtains, based on the target data subset, an expected result corresponding to the to-be-processed text. If a determining result is no, the training device may delete the candidate training text, and continue to generate a next candidate training text.

Further, the training device may input a candidate training text into a first model, to compute, by using the first model, a perplexity loss (perplexity loss) corresponding to the candidate training text, and then obtain a third score that is output by the first model and that corresponds to the candidate training text. For example, the training device generates six candidate training texts based on one target data subset, and obtains a third score for each candidate training text. Details are shown in the following table.

**Table 1**

| Candidate training text | Third score | Candidate training text | Third score |
|---|---|---|---|
| Want to talk with you about a picture book | 4.321032165179162 | Want to talk about a picture book with | 11.43761551051832 |
| Read this story | 2.440600608831472 | Want same to read a book | 14.794469739236522 |
| Want to read this story with me | 6.343048812278409 | Want to read a picture book with | 7.786327851748459 |

Table 1 shows six third scores that are in a one-to-one correspondence with the six candidate training texts, and each third score represents a perplexity loss corresponding to the candidate training text. A smaller third score corresponding to a candidate training text indicates higher quality of the candidate training text, so that a screening operation may be performed based on the third score corresponding to each candidate training text. It needs to be understood that the example in Table 1 is merely for ease of understanding, and is not intended to limit this solution.

In this embodiment of this application, in an actual application process of the target model, texts entered by the user into the target model are all relatively smooth, and third scores corresponding to to-be-processed texts used for training meet the preset condition. Therefore, it is ensured that all the to-be-processed texts used for training are high-quality texts, that is, the to-be-processed texts used for training are relatively similar to an actual language habit of the user. This helps improve quality of training data, and also helps improve precision of the trained target model.

In another implementation, the training device may directly generate, based on the target data subset, a to-be-processed text used for training the model, and obtain an expected result corresponding to the to-be-processed text. In other words, each candidate training text is determined as a to-be-processed text used for training the model, and no screening operation is performed any longer based on smoothness of the candidate training text.

For a process of generating a to-be-processed text (or a candidate training text) based on the target data subset, refer to the description of the step 301. One target data subset may include at least one level of target label, the target data subset further includes a third character string corresponding to the target label, and the target label indicates semantics of the third character string.

Specifically, in one case, the target data subset includes at least two third labels, and the at least two third labels include a first expected label and a second expected label; and the target data subset may include at least two target subsets in a one-to-one correspondence with the at least two third labels, where each target subset includes a third label and at least one third character string corresponding to the third label. For example, a target subset may include a third label "Query", and a plurality of third character strings corresponding to the label "Query" include but are not limited to "Make a query", "Make a search", "Ask", "Have a check", or the like. This is not further enumerated herein.

The at least two target subsets may include a first subset corresponding to the first expected label and a second subset corresponding to the second expected label, the first subset includes a first character string and the first expected label corresponding to the first character string, and the second subset includes a second character string and the second expected label corresponding to the second character string.

In this case, the to-be-processed text (or the candidate training text) may include the first character string and the second character string, and the expected result corresponding to the to-be-processed text (or the candidate training text) includes the first expected label corresponding to the first character string and the second expected label corresponding to the second character string.

For example, one target data subset may include three target subsets corresponding to three third labels. A first subset includes a label "Query", and further includes four character strings "Make a query", "Make a search", "Ask", and "Have a check" that correspond to the label "Query"; a second subset includes a label "Phone number", and further includes four character strings "Phone number", "Mobile phone number", "Mobile number", and "Number" that correspond to the label "Phone number"; and a third subset includes a label "Home location", and further includes four character strings "Which place", "From where", "Where", and "Where is it" that correspond to the label "Home location".

In this case, one to-be-processed text based on the target subset may be "Query where is the phone number", "Query which place the phone number is from", "Ask where is the phone number", or another form of to-be-processed text, or the like. Three expected labels included in an expected result corresponding to the to-be-processed text are respectively "Query", "Phone number", and "Home location". It needs to be understood that the example herein is merely for ease of understanding, and is not intended to limit this solution.

In this embodiment of this application, the to-be-processed text used for training and the expected result corresponding to the to-be-processed text are reversely generated based on the target data subset, so that separability of the to-be-processed text and accuracy of the expected result corresponding to the to-be-processed text are ensured. In other words, it is ensured that the to-be-processed text used for training meets processing logic of the target model. This helps improve adaptation between the to-be-processed text used for training and the target model, thereby helping improve accuracy of the trained target model.

In another case, the target data subset has only one third label, and the training device may select, from one or more third character strings corresponding to the target label, any third character string as the to-be-processed text (or the candidate training text), and use the target label as the expected result corresponding to the to-be-processed text (or the candidate training text).

In another implementation, if the step 301 is not performed, or if the step 301 is performed and the plurality of target data subsets obtained in the step 301 are not used to generate training data of the target model, the training device may further pre-store a training data set. The training data set includes a plurality of to-be-processed texts and an expected result corresponding to each to-be-processed text. The training device obtains, from the training data set, one to-be-processed text and an expected result corresponding to the to-be-processed text.

303: The training device performs semantic understanding on the to-be-processed text by using the target model, to obtain a prediction result output by the target model, where the prediction result indicates that the to-be-processed text is split into at least one first character set, each first character set includes at least one character, the prediction result further includes at least one first label corresponding to the at least one first character set, and the at least one first label indicates a predicted intention of the to-be-processed text.

In this embodiment of this application, after obtaining the to-be-processed text, the training device performs semantic understanding on the to-be-processed text by using the target model, to obtain the prediction result output by the target model.

The prediction result indicates that the to-be-processed text is split into at least one first character set, each first character set includes at least one character, the prediction result further includes at least one first label corresponding to the at least one first character set, and the at least one first label indicates a predicted intention of the to-be-processed text.

Further, the at least one first label may include only one level of label, or may include at least two levels of labels. When the at least one first label includes at least two levels of labels, the at least two levels of labels may include a parent label and a child label; and the prediction result further indicates a belonging relationship between the parent label and the child label, that is, the prediction result further indicates a quantity of levels corresponding to the at least two levels of labels, a level to which each first label belongs, and a correspondence between different labels.

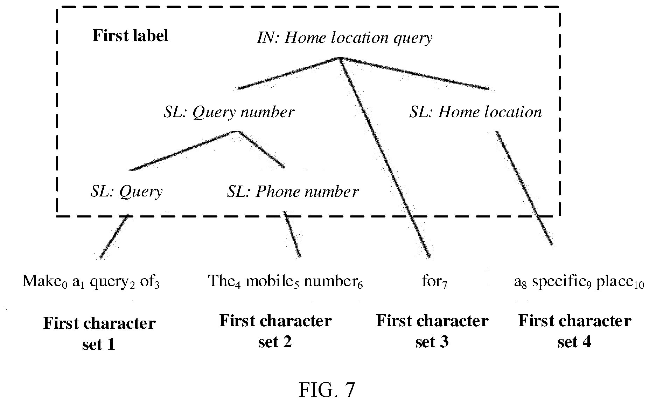

To understand this solution more intuitively, refer to FIG. 7. FIG. 7 is a schematic diagram of a prediction result in a neural-network training method according to an embodiment of this application. In FIG. 7, an example is used for description, in which a prediction result of a to-be-processed text is displayed in a tree structure. As shown in FIG. 7, the to-be-processed text is "Make a query of the mobile number for a specific place", and the prediction result of the to-be-processed text shows that the to-be-processed text is split into four first character sets: "Make a query of", "the mobile number", "for", and "a specific place". As shown in FIG. 7, the prediction result of the to-be-processed text further includes five first labels: "Home location query", "Query number", "Home location", "Query", and "Phone number". The label "Home location query" represents semantics of the entire to-be-processed text, the label "Query number" represents semantics of "Make a query of the mobile number", the label "Home location" represents semantics of "a specific place", the label "Query" represents semantics of "Make a query of", and the label "Phone number" represents semantics of "the mobile number", so that an intention of the entire to-be-processed text can be understood based on the five first labels. It needs to be understood that the example in FIG. 7 is merely for ease of understanding this solution, and is not intended to limit this solution.

In this embodiment of this application, the prediction result may include at least two levels of labels, the at least two levels of labels may include a parent label and a child label, and the prediction result further indicates a belonging relationship between the parent label and the child label. In other words, the prediction result carries more abundant information, therefore helping improve accuracy of the process of understanding the intention of the to-be-processed text.

There are N splitting manners corresponding to the to-be-processed text, that is, there may be N splitting manners for the to-be-processed text, N is an integer greater than or equal to 1, the prediction result indicates a target splitting manner corresponding to the to-be-processed text, the target splitting manner is one of the N splitting manners, and the prediction result is obtained based on a degree of matching between the first character set and the first label. Further, the prediction result is obtained based on a first score corresponding to each first character set, where the first score corresponding to the first character set indicates a degree of matching between the first character set and the first label.

Further, because each first character set corresponds to one first score, the to-be-processed text corresponds to at least one first score; and the training device may obtain a value of a target total score corresponding to the target splitting manner, where the value of the target total score corresponding to the target splitting manner is a sum of the at least one first score corresponding to the target splitting manner, and the target splitting manner may be a splitting manner whose target total score is the highest in the N splitting manners, or the value of the target total score corresponding to the target splitting manner is greater than or equal to a first threshold.

In an example, if the to-be-processed text is "Make a phone call to Xiao Ming", a splitting manner corresponding to the to-be-processed text may be "to Xiao Ming" and "Make a phone call"; another splitting manner may be "to", "Xiao Ming", and "Make a phone call"; still another splitting manner may be "to Xiao Ming", "Make", and "a phone call"; and yet another splitting manner may be "Make to Xiao Ming" and "a phone call", or the like. It needs to be understood that the example herein is merely used to facilitate an understanding of a concept of splitting the to-be-processed text, and is not intended to enumerate all splitting manners of the to-be-processed text.

In this embodiment of this application, the finally output prediction result indicates the target splitting manner corresponding to the to-be-processed text, and the prediction result is obtained based on the first score corresponding to each first character set, where the first score corresponding to the first character set indicates the degree of matching between the first character set and the first label. A higher degree of matching between the first character set and the first label indicates that the first label can more accurately indicate semantics of the first character set. According to the foregoing solution, at least one first label capable of more accurately indicating the intention of the to-be-processed text can be obtained.

Specifically, because the to-be-processed text may be split into any form, the training device may obtain a target character string from the to-be-processed text, to generate a first label that matches the target character string and obtain a first score of the first label that matches the target character string. The target character string is a character string having any length in the to-be-processed text. The training device may repeatedly perform the foregoing operations, to generate, for all the target character strings corresponding to the to-be-processed text, first labels and first scores that match the target character strings, so as to determine the prediction result corresponding to the to-be-processed text.

For example, if the to-be-processed text is "What is the phone number of Xiao Ming", the target character string may be any one of the following: "What", "is", "the", "phone", "number", "of", "Xiao", "Ming", "What is", "is the", "the phone", "phone number", "number of", "of Xiao", "Xiao Ming", "What is the", "is the phone", "the phone number", "phone number of", "number of Xiao", "of Xiao Ming", "What is the phone", "is the phone number", "the phone number of", "phone number of Xiao", "number of Xiao Ming", ..., "the phone number of Xiao Ming", "What is the phone number of Xiao", "is the phone number of Xiao Ming", or "What is the phone number of Xiao Ming". For the omitted part, refer to the foregoing example descriptions for understanding, and no further enumeration is provided herein.

Further, a process of obtaining the first label that matches the first character set (that is, an example of the target character string) is described herein. The training device may match the first character set with a plurality of character strings in the first data set, to determine at least one target character string that matches the first character set, where one character string includes at least one character. The training device obtains, from the first data set, at least one second label corresponding to the at least one target character string; or if the first data set does not have any character string that matches the first character set, the training device may obtain a null label corresponding to the at least one target character string.

The training device may match, based on the first character set and the at least one second label (or the null label) by using the target model, the first character set with a plurality of labels in the first data set, to obtain a first label that matches the first character set. More specifically, the training device may generate, based on the first character set and the at least one second label (or the null label) by using a first model in the target model, a degree of matching between the first character set and each label in the first data set, to obtain a plurality of second scores corresponding to the first character set, where one second score indicates a degree of matching between the first character set and one label in the first data set; and the training device determines, based on the plurality of second scores by using the target model, the first label that matches the first character set, and obtains a first score of the first label that matches the first character set.

In this embodiment of this application, in a process of generating the first label that matches the first character set, the first character set is matched with the plurality of character strings in the first data set to determine the at least one target character string that matches the first character set and obtain the at least one second label corresponding to the at least one target character string; and the first character set is matched with the plurality of labels in the first data set by using the target model, to obtain the first label that matches the first character set. In other words, when the character string that matches the second label and that is in a first database is updated, the target model does not need to be retrained, thereby avoiding a time cost arising from retraining of the target model. In addition, the character string in the first data set may be modified in time with reference to a change in an actual application scenario, thereby helping improve accuracy of understanding the intention of the to-be-processed text.

The first data set may include a plurality of target data subsets. In other words, the target data subsets may be applied to the inference phase of the target model. In this case, a meaning of the "target character string" is the same as a meaning of the "third character string" in the step 301, and a meaning of the "second label" is the same as a meaning of the "third label" in the step 301.

The first model may include an encoder and a decoder. For example, the encoder may use a transformer (transformer) structure, and the decoder may specifically use a multi-layer perceptron (multi-layer perceptron, MLP).

Specifically, the training device may input the first character set and the at least one second label (or the null label) into the encoder, to perform feature extraction by using the encoder, to generate a vector representation corresponding to the first character set; and the training device inputs the vector representation corresponding to the first character set into the decoder, to generate the plurality of second scores by using the decoder.

Optionally, in a case in which the training device has obtained the at least one second label corresponding to the first character set, after obtaining, from the first data set, the at least one second label corresponding to the at least one target character string, the training device may further input the to-be-processed text, the first character set, and the at least one second label into a second model in the target model, to generate target indication information by using the second model in the target model, where the target indication information indicates that each second label matches or does not match the first character set; and the training device screens the at least one second label based on the target indication information, to obtain at least one screened label.

The at least one screened label may be specifically represented as a null label, and the second model may be specifically represented as a binary model. Then when the target indication information is specifically represented as a first value, it indicates that the second label matches the first character set; or when the target indication information is specifically represented as a second value, it indicates that the second label does not match the first character set. For example, the first value may be "true", and the second value may be "false". For another example, the first value may be 1, and the second value may be 0. Specific representation forms of the first value and the second value are not further enumerated herein.

The at least one screened label may include at least one second label, or if the target indication information indicates that none of the second labels match the first character set, the at least one screened label may include a null label.

Correspondingly, that the training device generates, based on the first character set and the at least one second label by using the target model, a degree of matching between the first character set and each label in the first data set, to obtain a plurality of second scores corresponding to the first character set may include: The training device generates, based on the first character set and the at least one screened label by using the target model, the degree of matching between the first character set and each label in the first data set, to obtain the plurality of second scores corresponding to the first character set.

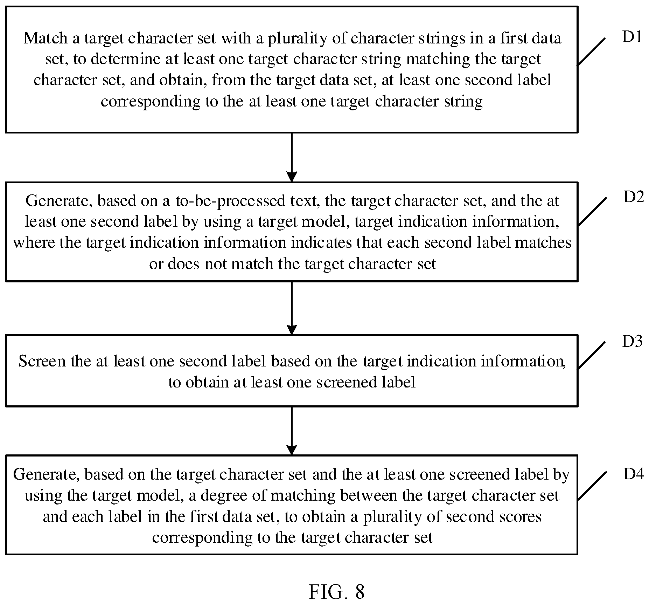

To understand this solution more intuitively, refer to FIG. 8. FIG. 8 is a schematic flowchart of generating a plurality of second scores corresponding to a first character set in a neural-network training method according to an embodiment of this application. D1: A training device matches a first character set with a plurality of character strings in a first data set, to determine at least one target character string matching the first character set, and obtains, from the first data set, at least one second label corresponding to the at least one target character string. D2: The training device generates, based on a to-be-processed text, the first character set, and the at least two second labels by using a target model, target indication information, where the target indication information indicates that each second label matches or does not match the first character set. D3: The training device screens the at least two second labels based on the target indication information, to obtain at least one screened label. D4: The training device generates, based on the first character set and the at least one screened label by using the target model, the plurality of second scores corresponding to the first character set. It needs to be understood that the example in FIG. 8 is merely for ease of understanding this solution, and is not intended to limit this solution.

In this embodiment of this application, after the at least one second label corresponding to the first character set is obtained, the at least one second label is further screened based on the entire to-be-processed text, so as to ensure that the at least one screened label can meet a context of the entire to-be-processed text, thereby reducing probability of matching an incorrect second label, and helping improve accuracy of understanding the intention of the to-be-processed text.

Further, the first character set may be split into a first character and a second character. For example, if the to-be-processed text is "Query where is the phone number of Xiao Ming" and the first character set is "the phone number of Xiao Ming", the first character may be "of Xiao Ming", and the second character may be "the phone number". It needs to be understood that the example herein is merely used to facilitate an understanding of a relationship between the first character set, the first character, and the second character, and is not intended to limit this solution.

Optionally, the training device may separately obtain a first label corresponding to the first character and a first label corresponding to the second character; determine, based on the first label corresponding to the first character, the first label corresponding to the second character, the first character set, and the at least one second label (or the null label) that matches the first character set, a first label that matches the first character set; and obtain a first score of the first label that matches the first character set. It needs to be noted that, the first label corresponding to the first character and the first label corresponding to the second character each may be represented as a null label, or may be represented as a label having a semantic meaning. A specific case needs to be determined with reference to an actual application scenario, and this is not limited herein.

Specifically, in an implementation, the training device may input the first label corresponding to the first character, the first label corresponding to the second character, the first character set, and the at least one second label (or the null label) that matches the first character set into a first model in the target model, so as to generate, by using the first model in the target model, a degree of matching between the first character set and each label in the first data set, to obtain the plurality of second scores corresponding to the first character set. The training device may determine a second score that has a largest value in the plurality of second scores as the first score, and determine a fifth label corresponding to the second score that has the largest value as the first label corresponding to the first character set.

In another implementation, after generating, based on the first character set and the second label by using the target model, the plurality of second scores corresponding to the first character set, the training device may obtain a sixth label corresponding to a second score that has a largest value in the plurality of second scores; the training device determines, based on the first data set, whether the sixth label is a parent label of the first label corresponding to the first character, and/or determines, based on the first data set, whether the sixth label is a parent label of the first label corresponding to the second character; and if a determining result is yes, the training device determines a second score that has a largest value in the plurality of second scores as the first score, and determines the sixth label as the first label corresponding to the first character set; or
if a determining result is no, the training device obtains a seventh label corresponding to a second score that has a second largest value in the plurality of second scores; the training device determines, based on the first data set, whether the seventh label is a parent label of the first label corresponding to the first character, and/or determines, based on the first data set, whether the seventh label is a parent label of the first label corresponding to the second character; and if a determining result is yes, the training device determines a second score that has a largest value in the plurality of second scores as the first score, and determines the seventh label as the first label corresponding to the first character set; or
if a determining result is no, the training device continues to perform the foregoing operation on a second score that has a third largest value in the plurality of second scores until the first label corresponding to the first character set is obtained, where the first label corresponding to the first character set is a parent label of the first label corresponding to the first character, and/or, the first label corresponding to the first character set is a parent label of the first label corresponding to the second character.

304: The training device trains the target model according to a target loss function, where the target loss function indicates a similarity between the prediction result and the expected result corresponding to the to-be-processed text.

In this embodiment of this application, after generating, by using the target model, the prediction result corresponding to the to-be-processed text, the training device may generate, based on the prediction result and the expected result corresponding to the to-be-processed text, a function value of the target loss function, and reversely update a weight parameter of the target model according to the function value of the target loss function, to complete training of the target model once. The training device repeatedly performs the steps 302 to 304, to complete iterative training on the target model, to obtain a trained target model. The trained target model may also be referred to as a mature target model.

The target loss function indicates a similarity between the prediction result corresponding to the to-be-processed text and the expected result corresponding to the to-be-processed text. For meanings of the prediction result and the expected result, refer to descriptions in the steps 302 and 303. Details are not described herein again. In an example, the target loss function may specifically use an MLP loss function, a Hamming loss (Hamming loss) function, or another type of loss function. Specific representation forms of the target loss function are not further enumerated herein.

Further, if the target model includes the first model and a second model, the second model may be a model on which a training operation has been performed. To be specific, during training of the target model once, the training device may reversely update a weight parameter of the first model in the target model according to the function value of the target loss function, and may no longer update a weight parameter of the second model in the target model.

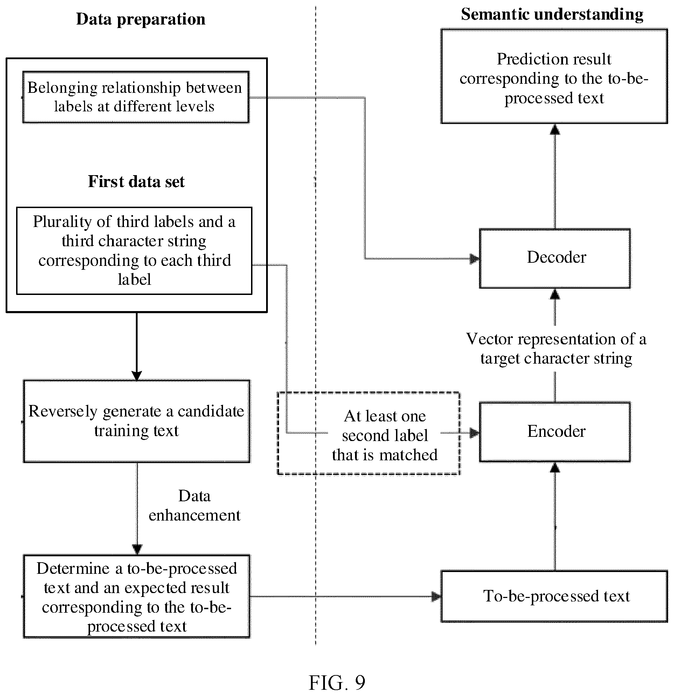

To understand this solution more intuitively, refer to FIG. 9. FIG. 9 is a schematic flowchart of a neural-network training method according to an embodiment of this application. In a data preparation phase, a training device obtains a plurality of target data subsets, and obtains a first data set based on the plurality of target data subsets; the training device generates one or more candidate training texts based on each target data subset; and the training device screens the one or more candidate training texts to obtain at least one to-be-processed text, and further generates, based on the target data subset, an expected result corresponding to the to-be-processed text. In a semantic understanding phase, the training device obtains a target character string from the to-be-processed text, and obtains, from the first data set, at least one second label that matches the target character string; the training device generates, based on the target character string and the at least one second label by using an encoder in a target model, a vector representation of the target character string; and the training device generates, based on the vector representation of the target character string, a belonging relationship between labels at different levels in the first data set, and all third labels in the first data set by using a decoder, a prediction result corresponding to the to-be-processed text. For a specific implementation of the foregoing steps, refer to descriptions in the steps 301 to 303. It needs to be understood that the example in FIG. 9 is merely used for ease of understanding this solution, and is not intended to limit this solution.

In this embodiment of this application, a target model training method is provided, and application scenarios of this solution are extended. Semantic understanding is performed on the to-be-processed text by using the trained target model, to obtain the prediction result output by the target model, where the prediction result indicates to split the to-be-processed text into the at least one first character set, and the prediction result further includes the first label that matches the at least one first character set, so as to indicate the intention of the to-be-processed text by using all the matched first labels. In this solution, the labels are used to match the characters in the to-be-processed text; and the first character set may exclude a reduplicated word, a modal auxiliary word, or the like, that is, a reduplicated word, a modal auxiliary word, or the like may be split into another first character set, so that the intention of the to-be-processed text can still be understood even if the reduplicated word, the modal auxiliary word, or the like exists in the entire to-be-processed text. In this way, a natural language understanding method with a stronger generalization capability is provided. In addition, the prediction result indicates how to split the entire to-be-processed text and further includes at least one label corresponding to the to-be-processed text, that is, the prediction result carries more abundant information, therefore helping improve accuracy of a process of understanding the intention of the to-be-processed text.

### 2. Inference phase

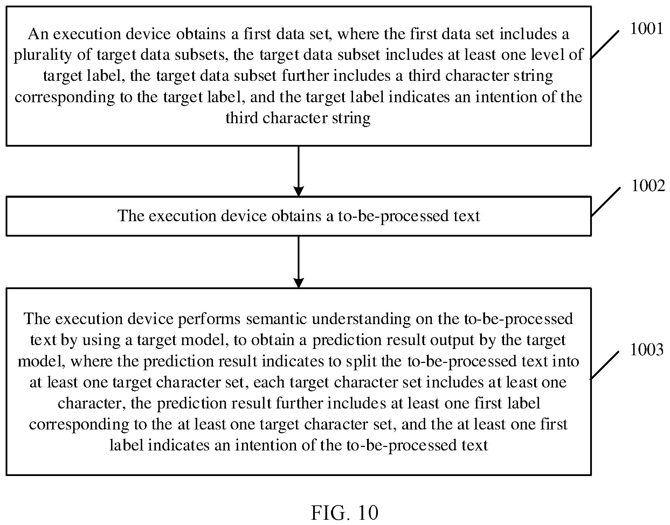

In embodiments of this application, the inference phase describes a process about how the execution device 210 performs semantic understanding by using the target model/rule 201 to generate a prediction result. Specifically, FIG. 10 is a schematic flowchart of a text data processing method according to an embodiment of this application. The text data processing method provided in this embodiment of this application may include the following steps.

1001: An execution device obtains a first data set, where the first data set includes a plurality of target data subsets, the target data subset includes at least one level of target label, the target data subset further includes a third character string corresponding to the target label, and the target label indicates semantics of the third character string.

In this embodiment of this application, the execution device may receive the first data set sent by the training device, and locally store the first data set. For a meaning of the first data set, refer to descriptions in the embodiment corresponding to FIG. 3. Details are not described herein again. In a process in which the execution device performs semantic understanding by using a target model, the training device may further update the first data set in the execution device. Correspondingly, the execution device may obtain an updated first data set.

1002: The execution device obtains a to-be-processed text.

In this embodiment of this application, the execution device may receive the to-be-processed text entered by a user. The user may enter the to-be-processed text in a form of speech, or may enter the to-be-processed text in a form of a text. A specific form of obtaining the to-be-processed text needs to be determined with reference to a specific product form of the execution device. This is not limited herein.

1003: The execution device performs semantic understanding on the to-be-processed text by using the target model, to obtain a prediction result output by the target model, where the prediction result indicates to split the to-be-processed text into at least one target character set, each target character set includes at least one character, the prediction result further includes at least one first label corresponding to the at least one target character set, and the at least one first label indicates an intention of the to-be-processed text.

In this embodiment of this application, for a specific implementation of performing the step 1003 by the execution device, refer to the description of the step 303 in the embodiment corresponding to FIG. 3; and a meaning of the "target character set" in the embodiment corresponding to FIG. 10 is similar to a meaning of the "first character set" in the embodiment corresponding to FIG. 3, and may be understood directly with reference to the foregoing descriptions. Details are not described herein again.

In this embodiment of this application, semantic understanding is performed on the to-be-processed text by using the target model, to obtain the prediction result output by the target model, where the prediction result indicates to split the to-be-processed text into the at least one target character set, and the prediction result further includes the first label that matches the at least one target character set, so as to indicate the intention of the to-be-processed text by using all the matched first labels. In this solution, the labels are used to match the characters in the to-be-processed text; and the target character set may exclude a reduplicated word, a modal auxiliary word, or the like, that is, a reduplicated word, a modal auxiliary word, or the like may be split into another target character set, so that the intention of the to-be-processed text can still be understood even if the reduplicated word, the modal auxiliary word, or the like exists in the entire to-be-processed text. In this way, a natural language understanding method with a stronger generalization capability is provided. In addition, the prediction result indicates how to split the entire to-be-processed text and further includes at least one label corresponding to the to-be-processed text, that is, the prediction result carries more abundant information, therefore helping improve accuracy of a process of understanding the intention of the to-be-processed text.

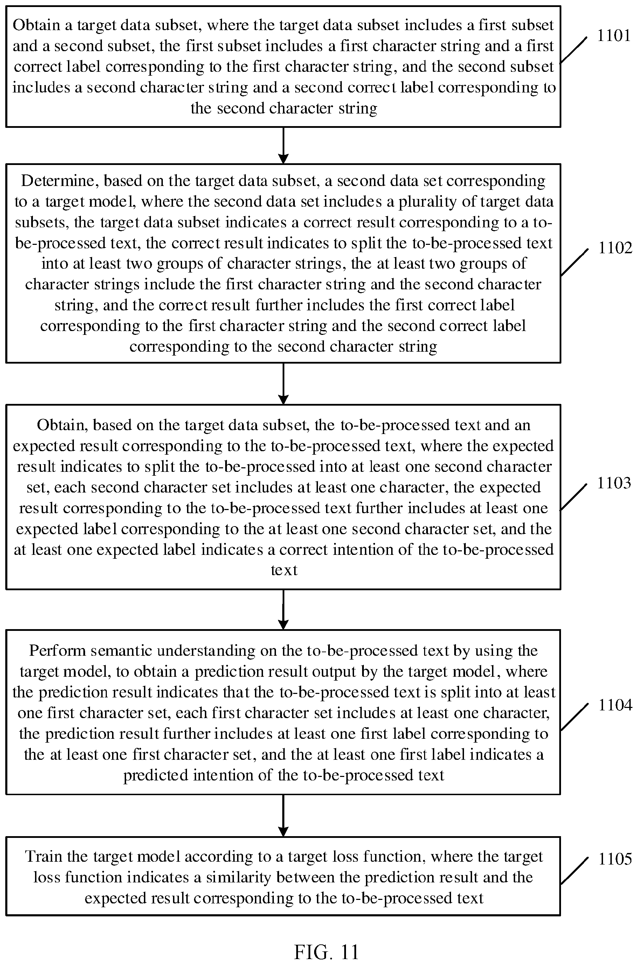

An embodiment of this application further provides a text data processing method. FIG. 11 is a schematic flowchart of a text data processing method according to an embodiment of this application. The text data processing method provided in this embodiment of this application may include the following steps.

1101: An electronic device obtains a target data subset, where the target data subset includes a first subset and a second subset, the first subset includes a first character string and a first expected label corresponding to the first character string, and the second subset includes a second character string and a second expected label corresponding to the second character string.

In this embodiment of this application, for a concept of the target data subset and a specific implementation of performing the step 1101 by the electronic device, refer to the description of the step 301 in the embodiment corresponding to FIG. 3. Details are not described herein again.

1102: The electronic device determines, based on the target data subset, a second data set corresponding to a target model, where the second data set includes a plurality of target data subsets, the target data subset indicates a correct result corresponding to a to-be-processed text, the correct result indicates to split the to-be-processed text into at least two groups of character strings, the at least two groups of character strings include the first character string and the second character string, and the correct result further includes the first expected label corresponding to the first character string and the second expected label corresponding to the second character string.

1103: The electronic device obtains, based on the target data subset, the to-be-processed text and an expected result corresponding to the to-be-processed text, where the expected result indicates to split the to-be-processed into at least one second character set, each second character set includes at least one character, the expected result corresponding to the to-be-processed text further includes at least one expected label corresponding to the at least one second character set, and the at least one expected label indicates a correct intention of the to-be-processed text.

1104: The electronic device performs semantic understanding on the to-be-processed text by using the target model, to obtain a prediction result output by the target model, where the prediction result indicates that the to-be-processed text is split into at least one first character set, each first character set includes at least one character, the prediction result further includes at least one first label corresponding to the at least one first character set, and the at least one first label indicates a predicted intention of the to-be-processed text.

1105: The electronic device trains the target model according to a target loss function, where the target loss function indicates a similarity between the prediction result and the expected result corresponding to the to-be-processed text.

In this embodiment of this application, for concepts of nouns in the steps 1103 to 1105 and specific implementations of performing the steps 1103 to 1105 by the electronic device, refer to descriptions in the embodiment corresponding to FIG. 3. Details are not described herein again.

It needs to be noted that the steps 1103 and 1105 are optional steps. If the electronic device is an execution device of the target model, the steps 1103 and 1105 may not be performed. If the electronic device is a training device of the target model, the steps 1103 and 1105 are mandatory.

In this embodiment of this application, a manner of obtaining the target data subset is further provided, to further extend application scenarios of this solution.

To more intuitively understand beneficial effects brought by embodiments of this application, the following describes the beneficial effects of embodiments of this application with reference to experimental data. A dataset used in an experiment is a public dataset Task-oriented Parsing Dataset. Refer to Table 2 below.

**Table 2**

| | Sound control | Social conversation |
|---|---|---|
| Template matching | 39.8% | 81.3% |
| Embodiments of this application | 93.8% | 88.7% |

Table 2 shows accuracy when an intention of an input to-be-processed text is understood by using an existing "template matching" manner, and accuracy when the intention of the input to-be-processed text is understood by using the target model provided in embodiments of this application. The column "Sound control" means that the input to-be-processed text is used to control a sound volume, and the column "Social conversation" means that the input to-be-processed text is a social language. It can be learned from the foregoing comparison that, the methods provided in embodiments of this application can have a relatively strong generalization capability, and can effectively improve accuracy of an intention identification process.

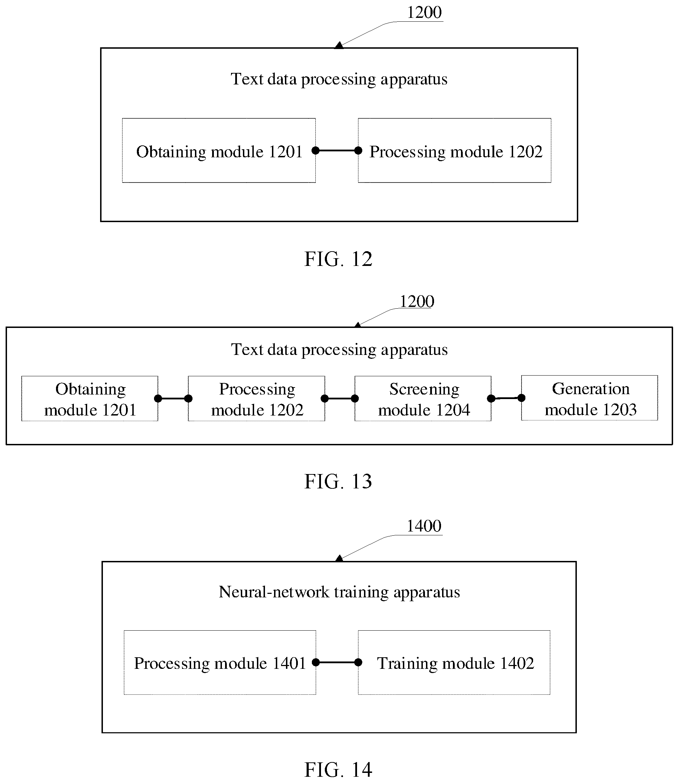

On a basis of the embodiments corresponding to FIG. 1 to FIG. 11, the following further provides related devices configured to implement the foregoing solutions, so as to better implement the solutions in embodiments of this application. Specifically, refer to FIG. 12. FIG. 12 is a schematic diagram of a structure of a text data processing apparatus according to an embodiment of this application. The text data processing apparatus 1200 may include: an obtaining module 1201, configured to obtain a to-be-processed text, where the to-be-processed text includes a plurality of characters; and a processing module 1202, configured to process the to-be-processed text by using a target model to obtain a prediction result, where the prediction result indicates to split the to-be-processed text into a plurality of target character sets, each target character set includes at least one character, the prediction result further includes a plurality of first labels, one first label indicates semantics of one target character set, and the plurality of first labels are used to determine an intention of the to-be-processed text.

In a possible design, the plurality of first labels include at least two levels of labels, the at least two levels of labels include a parent label and a child label, and a belonging relationship exists between the parent label and the child label.

In a possible design, there are N splitting manners corresponding to the to-be-processed text, N is an integer greater than or equal to 1, the prediction result indicates a target splitting manner corresponding to the to-be-processed text, the target splitting manner belongs to the N splitting manners, and the prediction result is obtained based on degrees of matching between the plurality of target character sets and the plurality of first labels.

In a possible design, the processing module 1202 is specifically configured to: match each target character set with a plurality of character strings in a first data set, to determine a target character string that matches the target character set; obtain, from the first data set, at least one second label corresponding to the target character string, where one character string includes at least one character; and match, based on each target character set and the second label by using the target model, each target character set with a plurality of labels in the first data set, to obtain the first label that matches each target character set.

In a possible design, with reference to FIG. 13, FIG. 13 is another schematic diagram of a structure of a text data processing apparatus according to an embodiment of this application. The text data processing apparatus 1200 further includes: a generation module 1203, configured to generate, based on the to-be-processed text, the target character set, and the at least two second labels by using the target model, target indication information, where the target indication information indicates that each second label matches or does not match the target character set; and a screening module 1204, configured to screen the at least two second labels based on the target indication information, to obtain at least one screened label; and the processing module 1202 is specifically configured to match, based on the target character set and the at least one screened label by using the target model, the target character set with the plurality of labels in the first data set.

It needs to be noted that content, such as information exchange between the modules/units in the text data processing apparatus 1200 and an execution process, is based on a same concept as the method embodiments in this application. For specific content, refer to descriptions in the method embodiments in this application. Details are not described herein again.

An embodiment of this application further provides a neural-network training apparatus. Refer to FIG. 14. FIG. 14 is a schematic diagram of a structure of a neural-network training apparatus according to an embodiment of this application. The neural-network training apparatus 1400 includes: a processing module 1401, configured to process a to-be-processed text by using a target model to obtain a prediction result, where the to-be-processed text includes one or more characters, the prediction result indicates to split the to-be-processed text into a plurality of first character sets, each first character set includes at least one character, the prediction result further includes a plurality of first labels, one first label indicates semantics of one target character set, and the plurality of first labels are used to determine a predicted intention of the to-be-processed text; and a training module 1402, configured to train the target model according to a target loss function to obtain a trained target model; where the target loss function indicates a similarity between the prediction result and an expected result corresponding to the to-be-processed text, the expected result corresponding to the to-be-processed text indicates to split the to-be-processed text into a plurality of second character sets, each second character set includes at least one character, the expected result corresponding to the to-be-processed text further includes a plurality of expected labels, one expected label indicates semantics of one second character set, and the plurality of expected labels are used to determine a correct intention of the to-be-processed text.

In a possible design, the plurality of first labels include at least two levels of labels, the at least two levels of labels include a parent label and a child label, and a belonging relationship exists between the parent label and the child label.

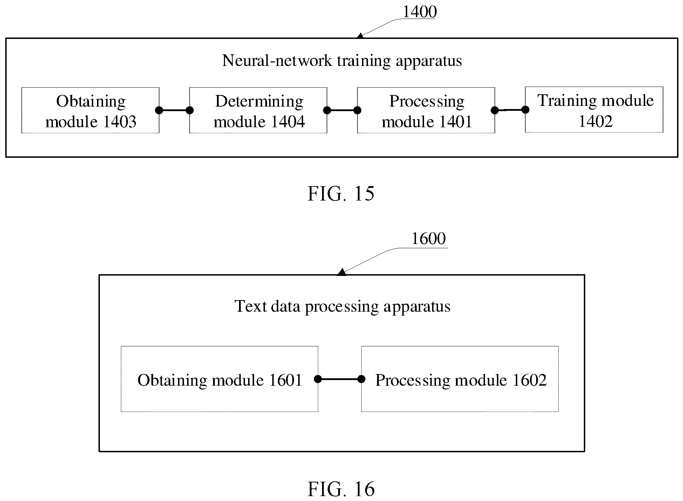

In a possible design, with reference to FIG. 5, FIG. 15 is another schematic diagram of a structure of a neural-network training apparatus according to an embodiment of this application. The neural-network training apparatus 1400 further includes: an obtaining module 1403, configured to obtain a target data subset, where the target data subset includes a first subset and a second subset, the first subset includes a first character string and a first expected label corresponding to the first character string, and the second subset includes a second character string and a second expected label corresponding to the second character string; and a determining module 1404, configured to determine, based on the target data subset, the to-be-processed text and the expected result corresponding to the to-be-processed text, where the to-be-processed text includes the first character string and the second character string, and the expected result includes the first expected label corresponding to the first character string and the second expected label corresponding to the second character string.

In a possible design, a third score corresponding to the to-be-processed text meets a preset condition, and the third score indicates quality of the to-be-processed text.

It needs to be noted that content, such as information exchange between the modules/units in the neural-network training apparatus 1400 and an execution process, is based on a same concept as the method embodiments in this application. For specific content, refer to descriptions in the method embodiments in this application. Details are not described herein again.

An embodiment of this application further provides a text data processing apparatus. Refer to FIG. 16. FIG. 16 is a schematic diagram of a structure of a text data processing apparatus according to an embodiment of this application. The text data processing apparatus 1600 includes: an obtaining module 1601, configured to obtain a target data subset, where the target data subset includes a first subset and a second subset, the first subset includes a first character string and a first expected label corresponding to the first character string, and the second subset includes a second character string and a second expected label corresponding to the second character string; and a processing module 1602, configured to determine, based on the target data subset, a second data set corresponding to a target model, where the target model is used to perform semantic understanding on an input to-be-processed text, the second data set includes a plurality of target data subsets, and the second data set is used in a training phase of the target model and/or an inference phase of the target model. The target data subset indicates an expected result corresponding to the to-be-processed text, the expected result indicates to split the to-be-processed text into at least two groups of character strings, the at least two groups of character strings include the first character string and the second character string, and the correct result further includes the first expected label corresponding to the first character string and the second expected label corresponding to the second character string.

In a possible design, the obtaining module 1601 is further configured to obtain, through a display interface, a modification operation corresponding to the target data subset, where the modification operation includes any one or more of the following operations: deleting a character string in the target data subset, updating content of a character string in the target data subset, or adding a new character string to the target data subset.

In a possible design, the obtaining module 1601 is further configured to obtain the to-be-processed text, where the to-be-processed text includes a plurality of characters; and the processing module 1602 is further configured to process the to-be-processed text by using the target model to obtain a prediction result, where the prediction result indicates to split the to-be-processed text into a plurality of target character sets, each target character set includes at least one character, the prediction result further includes a plurality of first labels, one first label indicates semantics of one target character set, and the plurality of first labels are used to determine an intention of the to-be-processed text.

It needs to be noted that content, such as information exchange between the modules/units in the text data processing apparatus 1600 and an execution process, is based on a same concept as the method embodiments in this application. For specific content, refer to descriptions in the method embodiments in this application. Details are not described herein again.

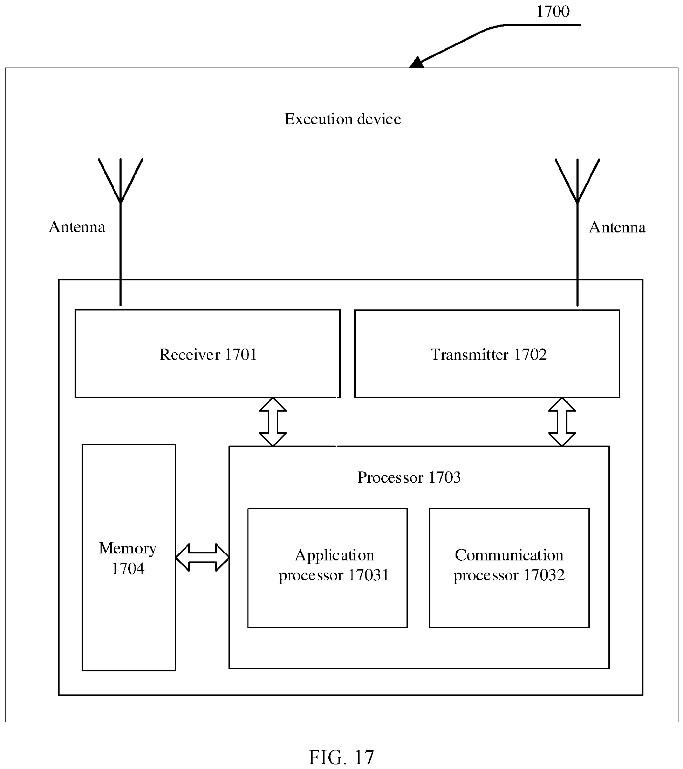

The following describes an execution device provided in an embodiment of this application. Refer to FIG. 17. FIG. 17 is a schematic diagram of a structure of an execution device according to an embodiment of this application. The execution device 1700 may be specifically represented as a virtual reality VR device, a mobile phone, a tablet, a notebook computer, a smart wearable device, a monitoring data processing device, a radar data processing device, or the like. This is not limited herein. Specifically, the execution device 1700 includes: a receiver 1701, a transmitter 1702, a processor 1703, and a memory 1704 (where there may be one or more processors 1703 in the execution device 1700, and one processor is used as an example in FIG. 17). The processor 1703 may include an application processor 17031 and a communication processor 17032. In some embodiments of this application, the receiver 1701, the transmitter 1702, the processor 1703, and the memory 1704 may be connected through a bus or in another manner.

The memory 1704 may include a read-only memory and a random access memory, and provides instructions and data to the processor 1703. A part of the memory 1704 may further include a non-volatile random access memory (non-volatile random access memory, NVRAM). The memory 1704 stores processor instructions and operation instructions, an executable module or a data structure, or a subset thereof, or an extended set thereof. The operation instructions may include various operation instructions used to implement various operations.

The processor 1703 controls operations of the execution device. During specific application, the components of the execution device are coupled together through a bus system. The bus system may further include a power bus, a control bus, a state signal bus, and the like, in addition to a data bus. However, for clear description, various types of buses in the figure are collectively referred to as the bus system.

The methods disclosed in the foregoing embodiments of this application may be applied to the processor 1703, or may be implemented by the processor 1703. The processor 1703 may be an integrated circuit chip and has a signal processing capability. In an implementation process, steps in the foregoing methods may be implemented by using a hardware integrated logical circuit in the processor 1703, or by using instructions in a form of software. The processor 1703 may be a general-purpose processor, a digital signal processor (digital signal processor, DSP), a microprocessor, or a microcontroller; and may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 1703 may implement or perform the methods, steps, and logical block diagrams disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software modules may be located in a mature storage medium in the art, for example, a random access memory, a flash memory, a read-only memory, a programmable read-only memory, an electrically erasable programmable memory, or a register. The storage medium is located in the memory 1704, and the processor 1703 reads information in the memory 1704 and completes steps in the foregoing methods in combination with hardware of the processor 1703.

The receiver 1701 may be configured to receive input digital or character information, and generate a signal input related to setting and function control of the execution device. The transmitter 1702 may be configured to output digital or character information through a first interface. The transmitter 1702 may be further configured to send instructions to a disk group through the first interface, to modify data in the disk group. The transmitter 1702 may further include a display device such as a display screen.

In this embodiment of this application, the application processor 17031 in the processor 1703 is configured to perform the text data processing method performed by the execution device in the embodiment corresponding to FIG. 10. Specifically, the application processor 17031 is configured to:
obtain a to-be-processed text, where the to-be-processed text includes a plurality of characters; and
process the to-be-processed text by using a target model to obtain a prediction result, where the prediction result indicates to split the to-be-processed text into a plurality of target character sets, each target character set includes at least one character, the prediction result further includes a plurality of first labels, one first label indicates semantics of one target character set, and the plurality of first labels are used to determine an intention of the to-be-processed text.

It needs to be noted that a specific manner in which the application processor 17031 performs the foregoing steps is based on a same concept as the method embodiment corresponding to FIG. 10 in this application. Technical effects thereof are the same as those in the method embodiment corresponding to FIG. 10 in this application. For specific content, refer to descriptions in the method embodiments in this application. Details are not described herein again.

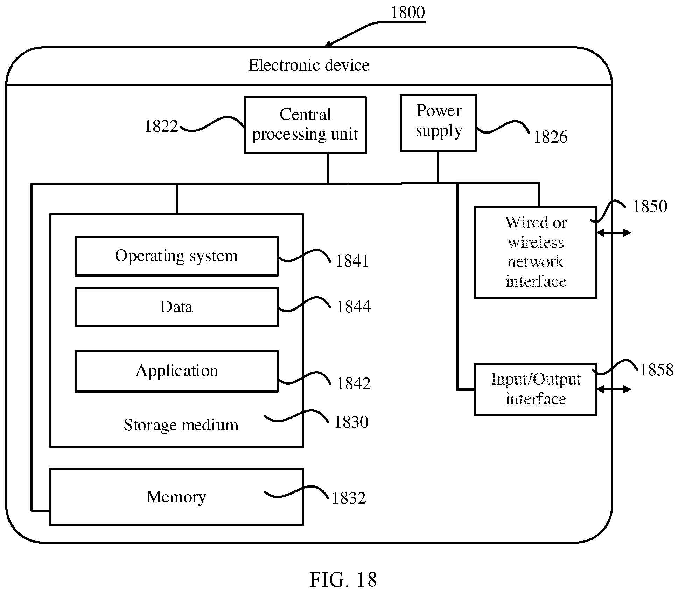

An embodiment of this application further provides an electronic device. Refer to FIG. 18. FIG. 18 is a schematic diagram of a structure of an electronic device according to an embodiment of this application. Specifically, the electronic device 1800 is implemented by one or more servers. The electronic device 1800 may vary greatly due to different configurations or performance, and may include one or more central processing units (central processing unit, CPU) 1822 (for example, one or more processors) and a memory 1832, and one or more storage media 1830 (for example, one or more mass storage devices) that store an application 1842 or data 1844. The memory 1832 and the storage medium 1830 may be used for transient storage or persistent storage. The program stored in the storage medium 1830 may include one or more modules (not shown in FIG. 18), and each module may include a series of instruction operations on the electronic device. Further, the central processing unit 1822 may be configured to communicate with the storage medium 1830, to perform, on the electronic device 1800, a series of instruction operations in the storage medium 1830.

The electronic device 1800 may further include one or more power supplies 1826, one or more wired or wireless network interfaces 1850, one or more input/output interfaces 1858, and/or one or more operating systems 1841, such as Windows ServerTM, Mac OS XTM, UnixTM, LinuxTM, and FreeBSDTM.

In this embodiment of this application, in one case, the central processing unit 1822 is configured to perform the method performed by the training device in the embodiment corresponding to FIG. 3. Specifically, the central processing unit 1822 may be configured to:
process a to-be-processed text by using a target model to obtain a prediction result, where the to-be-processed text includes a plurality of characters, the prediction result indicates to split the to-be-processed text into a plurality of first character sets, each first character set includes at least one character, the prediction result further includes a plurality of first labels, one first label indicates semantics of one target character set, and the plurality of first labels are used to determine a predicted intention of the to-be-processed text; and
train the target model according to a target loss function to obtain a trained target model; where
the target loss function indicates a similarity between the prediction result and an expected result corresponding to the to-be-processed text, the expected result corresponding to the to-be-processed text indicates to split the to-be-processed text into a plurality of second character sets, each second character set includes at least one character, the expected result corresponding to the to-be-processed text further includes a plurality of expected labels, one expected label indicates semantics of one second character set, and the plurality of expected labels are used to determine a correct intention of the to-be-processed text.

It needs to be noted that a specific manner in which the central processing unit 1822 performs the foregoing steps is based on a same concept as the method embodiment corresponding to FIG. 3 in this application. Technical effects thereof are the same as those in the method embodiment corresponding to FIG. 3 in this application. For specific content, refer to descriptions in the method embodiments in this application. Details are not described herein again.

In one case, the central processing unit 1822 is configured to perform the method performed by the electronic device in the embodiment corresponding to FIG. 11. Specifically, the central processing unit 1822 may be configured to:
obtain a target data subset, where the target data subset includes a first subset and a second subset, the first subset includes a first character string and a first expected label corresponding to the first character string, and the second subset includes a second character string and a second expected label corresponding to the second character string; and
determine, based on the target data subset, a second data set corresponding to a target model, where the target model is used to perform semantic understanding on an input to-be-processed text, the second data set includes a plurality of target data subsets, and the second data set is used in a training phase of the target model and/or an inference phase of the target model; and
the target data subset indicates an expected result corresponding to the to-be-processed text, the expected result indicates to split the to-be-processed text into at least two groups of character strings, the at least two groups of character strings include the first character string and the second character string, and the correct result further includes the first expected label corresponding to the first character string and the second expected label corresponding to the second character string.

It needs to be noted that a specific manner in which the central processing unit 1822 performs the foregoing steps is based on a same concept as the method embodiment corresponding to FIG. 11 in this application. Technical effects thereof are the same as those in the method embodiment corresponding to FIG. 11 in this application. For specific content, refer to descriptions in the method embodiments in this application. Details are not described herein again.

An embodiment of this application further provides a computer program product. When the computer program runs on a computer, the computer is enabled to perform the steps performed by the training device in the method described in the embodiment shown in FIG. 3, or the computer is enabled to perform the steps performed by the execution device in the method described in the embodiment shown in FIG. 10, or the computer is enabled to perform the steps performed by the electronic device in the method described in the embodiment shown in FIG. 11.

An embodiment of this application further provides a computer readable storage medium. The computer readable storage medium stores a program used for signal processing. When the program runs on a computer, the computer is enabled to perform the steps performed by the training device in the method described in the embodiment shown in FIG. 3, or the computer is enabled to perform the steps performed by the execution device in the method described in the embodiment shown in FIG. 10, or the computer is enabled to perform the steps performed by the electronic device in the method described in the embodiment shown in FIG. 11.

The text data processing apparatus, the neural-network training apparatus, the execution device, the electronic device, and the training device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip performs the text data processing method described in the embodiment shown in FIG. 10 or FIG. 11, or the chip performs the neural-network training method described in the embodiment shown in FIG. 3. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

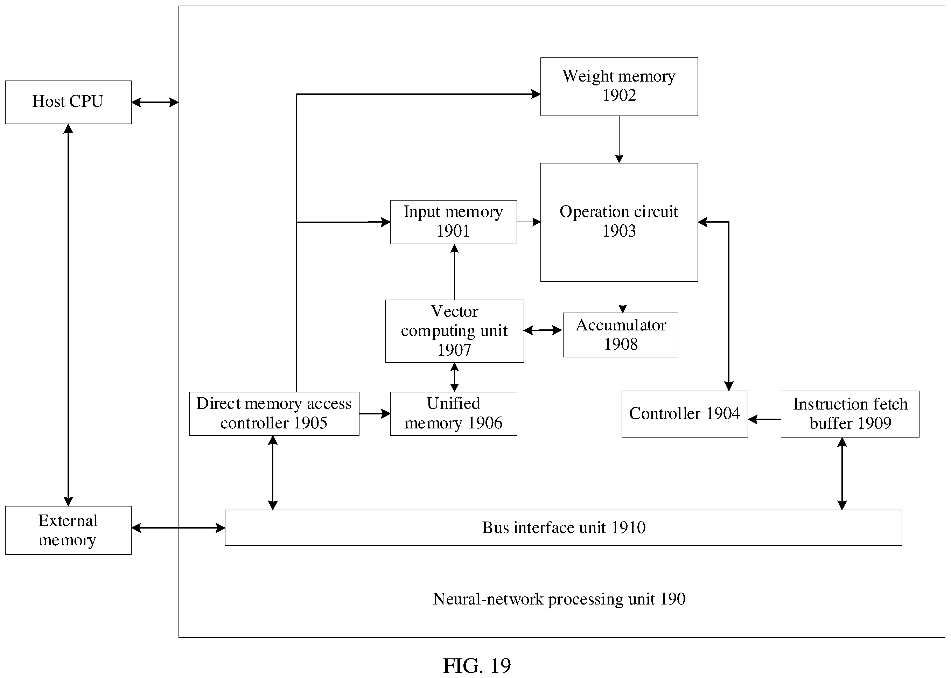

Specifically, refer to FIG. 19. FIG. 19 is a schematic diagram of a structure of a chip according to an embodiment of this application. The chip may be represented as a neural-network processing unit NPU 190. The NPU 190 is mounted to a host CPU (Host CPU) as a coprocessor, and the host CPU allocates a task. A core part of the NPU is an operation circuit 1903. A controller 1904 controls the operation circuit 1903 to extract matrix data in a memory and perform a multiplication operation.

In some implementations, the operation circuit 1903 internally includes a plurality of processing engines (Processing Engine, PE). In some implementations, the operation circuit 1903 is a two-dimensional systolic array. The operation circuit 1903 may alternatively be a one-dimensional systolic array or another electronic circuit that can perform mathematical operations such as multiplication and addition. In some implementations, the operation circuit 1903 is a general-purpose matrix processor.

For example, it is assumed that there is an input matrix A, a weight matrix B, and an output matrix C. The operation circuit fetches data corresponding to the matrix B from a weight memory 1902, and buffers the data in each PE in the operation circuit. The operation circuit fetches data of the matrix A from an input memory 1901, to perform a matrix operation on the matrix B, and stores an obtained partial or final result of the matrixes into an accumulator (accumulator) 1908.

A unified memory 1906 is configured to store input data and output data. Weight data is directly transferred to the weight memory 1902 by using a direct memory access controller (Direct Memory Access Controller, DMAC) DMAC 1905. Input data is also transferred to the unified memory 1906 by using the DMAC.

ABIU (Bus Interface Unit), that is, a bus interface unit 1910, is configured to perform interaction between an AXI bus and the DMAC and between the AXI bus and an instruction fetch buffer (Instruction Fetch Buffer, IFB) 1909.

The bus interface unit (Bus Interface Unit, BIU for short) 1910 is used by the instruction fetch buffer 1909 to obtain instructions from an external memory, and is further used by the direct memory access controller 1905 to obtain original data of the input matrix A or the weight matrix B from the external memory.

The DMAC is mainly configured to transfer input data in an external memory DDR to the unified memory 1906, or transfer weight data to the weight memory 1902, or transfer input data to the input memory 1901.

A vector computing unit 1907 includes a plurality of operation processing units, and performs, if needed, further processing, for example, vector multiplication, vector addition, an exponential operation, a logarithmic operation, or size comparison, on an output of the operation circuit. The vector computing unit 1907 is mainly configured to perform network computing at a non-convolutional/fully-connected layer in a neural network, for example, batch normalization (batch normalization), pixel-level summation, and up-sampling on a feature plane.

In some implementations, the vector computing unit 1907 can store a processed output vector into the unified memory 1906. For example, the vector computing unit 1907 may apply a linear function or a nonlinear function to an output of the operation circuit 1903, for example, to perform linear interpolation on a feature plane extracted at a convolutional layer; or for another example, apply a linear function or a nonlinear function to an accumulated sum of a vector to generate an activation value. In some implementations, the vector computing unit 1907 generates a normalized value, a pixel-level summation value, or both. In some implementations, a processed output vector can be used as an activation input of the operation circuit 1903, for example, for use at a subsequent layer in the neural network.

The instruction fetch buffer (instruction fetch buffer) 1909 connected to the controller 1904 is configured to store instructions for use by the controller 1904.

The unified memory 1906, the input memory 1901, the weight memory 1902, and the instruction fetch buffer 1909 are all on-chip memories. The external memory is private to a hardware architecture of the NPU.

Operations at each layer in the target model shown in the foregoing embodiments may be performed by the operation circuit 1903 or the vector computing unit 1907.

The foregoing processor may be a general-purpose central processor, a microprocessor, an ASIC, or one or more integrated circuits for controlling program execution for the method in the first aspect.

In addition, it needs to be noted that the foregoing described apparatus embodiments are merely examples. The units described as separate parts may or may not be physically separate, and parts displayed as units may or may not be physical units, may be located in one position, or may be distributed on a plurality of network units. Some or all modules may be selected according to an actual need to achieve the objectives of the solutions of the embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, a function implemented by a computer program may be easily implemented by using corresponding hardware. In addition, specific hardware structures used to implement a same function may be varied, for example, an analog circuit, a digital circuit, or a dedicated circuit. However, in this application, a software program implementation is a better implementation in most cases. Based on such an understanding, the technical solutions of this application essentially or the part contributing to a current technology may be implemented in a form of a computer software product. The computer software product is stored in a readable storage medium, such as a floppy disk, a USB flash drive, a removable hard disk, a ROM, a RAM, a magnetic disk, or an optical disc of a computer; and includes several instructions for instructing a computer device (which may be a personal computer, a training device, or an electronic device, or the like) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device integrating one or more usable media, for example, a training device or a data center. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A text data processing method, wherein the method comprises:
obtaining a to-be-processed text, wherein the to-be-processed text comprises a plurality of characters; and
processing the to-be-processed text by using a target model to obtain a prediction result, wherein the prediction result indicates to split the to-be-processed text into a plurality of target character sets, each target character set comprises at least one character, the prediction result further comprises a plurality of first labels, one first label indicates semantics of one target character set, and the plurality of first labels are used to determine an intention of the to-be-processed text.

2. The method according to claim 1, wherein the plurality of first labels comprise at least two levels of labels, the at least two levels of labels comprise a parent label and a child label, and a belonging relationship exists between the parent label and the child label.

3. The method according to claim 1 or 2, wherein there are N splitting manners corresponding to the to-be-processed text, N is an integer greater than or equal to 1, the prediction result indicates a target splitting manner corresponding to the to-be-processed text, the target splitting manner belongs to the N splitting manners, and the prediction result is obtained based on degrees of matching between the plurality of target character sets and the plurality of first labels.

4. The method according to claim 3, wherein the processing the to-be-processed text by using a target model to obtain a prediction result comprises:
matching each target character set with a plurality of character strings in a first data set, to determine a target character string that matches the target character set; and obtaining, from the first data set, at least one second label corresponding to the target character string, wherein one character string comprises at least one character; and
matching, based on each target character set and the at least one second label by using the target model, each target character set with a plurality of labels in the first data set, to obtain the first label that matches each target character set.

5. The method according to claim 4, wherein when the at least one second label comprises at least two second labels, after the obtaining, from the first data set, at least one second label corresponding to the target character string, the method further comprises:
generating, based on the to-be-processed text, the target character set, and the at least two second labels by using the target model, target indication information, wherein the target indication information indicates that each second label matches or does not match the target character set; and
screening the at least two second labels based on the target indication information, to obtain at least one screened label; and
the matching, based on each target character set and the at least one second label by using the target model, each target character set with a plurality of labels in the first data set comprises:
matching, based on the target character set and the at least one screened label by using the target model, the target character set with the plurality of labels in the first data set.

6. A neural-network training method, wherein the method comprises:
processing a to-be-processed text by using a target model to obtain a prediction result, wherein the to-be-processed text comprises a plurality of characters, the prediction result indicates to split the to-be-processed text into a plurality of first character sets, each first character set comprises at least one character, the prediction result further comprises a plurality of first labels, one first label indicates semantics of one target character set, and the plurality of first labels are used to determine a predicted intention of the to-be-processed text; and
training the target model according to a target loss function to obtain a trained target model, wherein
the target loss function indicates a similarity between the prediction result and an expected result corresponding to the to-be-processed text, the expected result corresponding to the to-be-processed text indicates to split the to-be-processed text into a plurality of second character sets, each second character set comprises at least one character, the expected result corresponding to the to-be-processed text further comprises a plurality of expected labels, one expected label indicates semantics of one second character set, and the plurality of expected labels are used to determine a correct intention of the to-be-processed text.

7. The method according to claim 6, wherein the plurality of first labels comprise at least two levels of labels, the at least two levels of labels comprise a parent label and a child label, and a belonging relationship exists between the parent label and the child label.

8. The method according to claim 6 or 7, wherein before the processing a to-be-processed text by using a target model, the method further comprises:
obtaining a target data subset, wherein the target data subset comprises a first subset and a second subset, the first subset comprises a first character string and a first expected label corresponding to the first character string, and the second subset comprises a second character string and a second expected label corresponding to the second character string; and
determining, based on the target data subset, the to-be-processed text and the expected result corresponding to the to-be-processed text, wherein the to-be-processed text comprises the first character string and the second character string, and the expected result comprises the first expected label corresponding to the first character string and the second expected label corresponding to the second character string.

9. The method according to claim 8, wherein a third score corresponding to the to-be-processed text meets a preset condition, and the third score indicates quality of the to-be-processed text.

10. A text data processing method, wherein the method comprises:
obtaining a target data subset, wherein the target data subset comprises a first subset and a second subset, the first subset comprises a first character string and a first expected label corresponding to the first character string, and the second subset comprises a second character string and a second expected label corresponding to the second character string; and
determining, based on the target data subset, a second data set corresponding to a target model, wherein the target model is used to perform semantic understanding on an input to-be-processed text, the second data set comprises a plurality of target data subsets, and the second data set is used in a training phase of the target model and/or an inference phase of the target model; and
the target data subset indicates an expected result corresponding to the to-be-processed text, the expected result indicates to split the to-be-processed text into at least two groups of character strings, the at least two groups of character strings comprise the first character string and the second character string, and the correct result further comprises the first expected label corresponding to the first character string and the second expected label corresponding to the second character string.

11. The method according to claim 10, wherein the method further comprises:
obtaining, through a display interface, a modification operation corresponding to the target data subset, wherein the modification operation comprises any one or more of the following operations: deleting a character string in the target data subset, updating content of a character string in the target data subset, or adding a new character string to the target data subset.

12. The method according to claim 10 or 11, wherein the method further comprises:
obtaining the to-be-processed text, wherein the to-be-processed text comprises a plurality of characters; and
processing the to-be-processed text by using the target model to obtain a prediction result, wherein the prediction result indicates to split the to-be-processed text into a plurality of target character sets, each target character set comprises at least one character, the prediction result further comprises a plurality of first labels, one first label indicates semantics of one target character set, and the plurality of first labels are used to determine an intention of the to-be-processed text.

13. A text data processing apparatus, wherein the apparatus comprises:
an obtaining module, configured to obtain a to-be-processed text, wherein the to-be-processed text comprises a plurality of characters; and
a processing module, configured to process the to-be-processed text by using a target model to obtain a prediction result, wherein the prediction result indicates to split the to-be-processed text into a plurality of target character sets, each target character set comprises at least one character, the prediction result further comprises a plurality of first labels, one first label indicates semantics of one target character set, and the plurality of first labels are used to determine an intention of the to-be-processed text.

14. The apparatus according to claim 13, wherein the plurality of first labels comprise at least two levels of labels, the at least two levels of labels comprise a parent label and a child label, and a belonging relationship exists between the parent label and the child label.

15. The apparatus according to claim 13 or 14, wherein there are N splitting manners corresponding to the to-be-processed text, N is an integer greater than or equal to 1, the prediction result indicates a target splitting manner corresponding to the to-be-processed text, the target splitting manner belongs to the N splitting manners, and the prediction result is obtained based on degrees of matching between the plurality of target character sets and the plurality of first labels.

16. The apparatus according to claim 15, wherein the processing module is specifically configured to:
match each target character set with a plurality of character strings in a first data set, to determine a target character string that matches the target character set; and obtain, from the first data set, at least one second label corresponding to the target character string, wherein one character string comprises at least one character; and
match, based on each target character set and the second label by using the target model, each target character set with a plurality of labels in the first data set, to obtain the first label that matches each target character set.

17. The apparatus according to claim 16, wherein the apparatus further comprises:
a generation module, configured to generate, based on the to-be-processed text, the target character set, and the at least two second labels by using the target model, target indication information, wherein the target indication information indicates that each second label matches or does not match the target character set; and
a screening module, configured to screen the at least two second labels based on the target indication information, to obtain at least one screened label; and
the processing module is specifically configured to match, based on the target character set and the at least one screened label by using the target model, the target character set with the plurality of labels in the first data set.

18. A neural-network training apparatus, wherein the apparatus comprises:
a processing module, configured to process a to-be-processed text by using a target model to obtain a prediction result, wherein the to-be-processed text comprises a plurality of characters, the prediction result indicates to split the to-be-processed text into a plurality of first character sets, each first character set comprises at least one character, the prediction result further comprises a plurality of first labels, one first label indicates semantics of one target character set, and the plurality of first labels are used to determine a predicted intention of the to-be-processed text; and
a training module, configured to train the target model according to a target loss function to obtain a trained target model; wherein
the target loss function indicates a similarity between the prediction result and an expected result corresponding to the to-be-processed text, the expected result corresponding to the to-be-processed text indicates to split the to-be-processed text into a plurality of second character sets, each second character set comprises at least one character, the expected result corresponding to the to-be-processed text further comprises a plurality of expected labels, one expected label indicates semantics of one second character set, and the plurality of expected labels are used to determine a correct intention of the to-be-processed text.

19. The apparatus according to claim 18, wherein the plurality of first labels comprise at least two levels of labels, the at least two levels of labels comprise a parent label and a child label, and a belonging relationship exists between the parent label and the child label.

20. The apparatus according to claim 18 or 19, wherein the apparatus further comprises:
an obtaining module, configured to obtain a target data subset, wherein the target data subset comprises a first subset and a second subset, the first subset comprises a first character string and a first expected label corresponding to the first character string, and the second subset comprises a second character string and a second expected label corresponding to the second character string; and
a determining module, configured to determine, based on the target data subset, the to-be-processed text and the expected result corresponding to the to-be-processed text, wherein the to-be-processed text comprises the first character string and the second character string, and the expected result comprises the first expected label corresponding to the first character string and the second expected label corresponding to the second character string.

21. The apparatus according to claim 20, wherein a third score corresponding to the to-be-processed text meets a preset condition, and the third score indicates quality of the to-be-processed text.

22. A text data processing apparatus, wherein the apparatus comprises:
an obtaining module, configured to obtain a target data subset, wherein the target data subset comprises a first subset and a second subset, the first subset comprises a first character string and a first expected label corresponding to the first character string, and the second subset comprises a second character string and a second expected label corresponding to the second character string; and
a processing module, configured to determine, based on the target data subset, a second data set corresponding to a target model, wherein the target model is used to perform semantic understanding on an input to-be-processed text, the second data set comprises a plurality of target data subsets, and the second data set is used in a training phase of the target model and/or an inference phase of the target model; and
the target data subset indicates an expected result corresponding to the to-be-processed text, the expected result indicates to split the to-be-processed text into at least two groups of character strings, the at least two groups of character strings comprise the first character string and the second character string, and the correct result further comprises the first expected label corresponding to the first character string and the second expected label corresponding to the second character string.

23. The apparatus according to claim 22, wherein
the obtaining module is further configured to obtain, through a display interface, a modification operation corresponding to the target data subset, wherein the modification operation comprises any one or more of the following operations: deleting a character string in the target data subset, updating content of a character string in the target data subset, or adding a new character string to the target data subset.

24. The apparatus according to claim 22 or 23, wherein
the obtaining module is further configured to obtain the to-be-processed text, wherein the to-be-processed text comprises a plurality of characters; and
the processing module is further configured to process the to-be-processed text by using the target model to obtain a prediction result, wherein the prediction result indicates to split the to-be-processed text into a plurality of target character sets, each target character set comprises at least one character, the prediction result further comprises a plurality of first labels, one first label indicates semantics of one target character set, and the plurality of first labels are used to determine an intention of the to-be-processed text.

25. A computer program product, wherein when the computer program runs on a computer, the computer is enabled to perform the method according to any one of claims 1 to 5, or the computer is enabled to perform the method according to any one of claims 6 to 9, or the computer is enabled to perform the method according to any one of claims 10 to 12.

26. A computer-readable storage medium, comprising a program, wherein when the program runs on a computer, the computer is enabled to perform the method according to any one of claims 1 to 5, or the computer is enabled to perform the method according to any one of claims 6 to 9, or the computer is enabled to perform the method according to any one of claims 10 to 12.

27. An execution device, comprising a processor and a memory, wherein the processor is coupled to the memory;
the memory is configured to store a program; and
the processor is configured to execute the program in the memory, so that the execution device performs the method according to any one of claims 1 to 5.

28. An electronic device, comprising a processor and a memory, wherein the processor is coupled to the memory;
the memory is configured to store a program; and
the processor is configured to execute the program in the memory, so that the electronic device performs the method according to any one of claims 6 to 9, or the electronic device performs the method according to any one of claims 11 to 12.
